(19) 

Europäisches
Patentamt
European
Patent Office
Office européen
des brevets

(11) **EP 4 044 762 A1**

(12) 

# EUROPEAN PATENT APPLICATION
published in accordance with Art. 153(4) EPC

(43) Date of publication:
**17.08.2022 Bulletin 2022/33**

(21) Application number: **20885884.5**

(22) Date of filing: **09.11.2020**

(51) International Patent Classification (IPC):
***H04W 84/06*** (2009.01)

(52) Cooperative Patent Classification (CPC):
**H04B 7/185; H04W 74/00; H04W 74/08;
H04W 84/06**

(86) International application number:
**PCT/CN2020/127590**

(87) International publication number:
**WO 2021/089054 (14.05.2021 Gazette 2021/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.11.2019 CN 201911090011
29.02.2020 CN 202010132351**

(71) Applicant: **Huawei Technologies Co., Ltd.
Shenzhen, Guangdong 518129 (CN)**

(72) Inventors:
• **WANG, Xiaolu
Shenzhen, Guangdong 518129 (CN)**

• **LUO, Hejia
Shenzhen, Guangdong 518129 (CN)**
• **XU, Chenlei
Shenzhen, Guangdong 518129 (CN)**
• **ZHOU, Jianwei
Shenzhen, Guangdong 518129 (CN)**
• **SHI, Xueliang
Shenzhen, Guangdong 518129 (CN)**

(74) Representative: **Körber, Martin Hans
Mitscherlich PartmbB
Patent- und Rechtsanwälte
Sonnenstraße 33
80331 München (DE)**

(54) **SATELLITE COMMUNICATION METHOD AND RELATED COMMUNICATION DEVICE**

(57) Embodiments of this application provide a satellite communication method and a related device. The satellite communication method includes: receiving a first common timing advance common TA parameter and a first common TA change amount calculation parameter, where the first common TA parameter is used to obtain a first common TA, and the first common TA change amount calculation parameter is used to update the first common TA to obtain an updated common TA; and sending a random access preamble by using the updated common TA. The solutions provided in the embodiments of this application help improve timeliness of the common TA used for sending the random access preamble, and further help reduce an occurrence probability of inter-symbol interference.

FIG. 2

EP 4 044 762 A1

**Description**

This application claims priority to Chinese Patent Application No. 202010132351.3 filed with China National Intellectual Property Administration on February 29, 2020 and entitled "SATELLITE COMMUNICATION METHOD AND RELATED COMMUNICATION DEVICE", and Chinese Patent Application No. 2019110900112 filed with China National Intellectual Property Administration on November 8, 2019 and entitled "SATELLITE COMMUNICATION METHOD AND RELATED COMMUNICATION DEVICE", which are incorporated herein by reference in their entireties.

**TECHNICAL FIELD**

This application relates to the field of communications technologies, and in particular, to a satellite communication method, a terminal device, a satellite communication device, a computer storage medium, and the like.

**BACKGROUND**

Because of remarkable advantages of global coverage, long-distance transmission, flexible networking, easy deployment and being free from geographical conditions, satellite communication has been widely applied to a plurality of fields, such as maritime communication, positioning and navigation, disaster relief, scientific experiments, video broadcasting, and earth observation.

A future terrestrial 5th generation mobile network (5G) has a complete industry chain, a large user group, a flexible and efficient application service model, and the like. Therefore, integrating a satellite communication system and the 5G network while complementing strength of each other to form a global seamless integrated communication network of sea, land, space, and air to meet a plurality of ubiquitous service requirements of users is an important direction of communication development in the future.

The satellite communication system uses a non-geostationary earth orbit (NGEO, Non-Geostationary Earth Orbit) satellite. Based on orbit altitudes of satellites, satellite mobile communication systems may be specifically classified into a geostationary earth orbit (GEO, Geostationary Earth Orbit) system, a medium earth orbit (MEO, Medium Earth Orbit) satellite communication system, and a low earth orbit (LEO, Low Earth Orbit) satellite communication system.

In addition, based on whether a beam of a satellite moves correspondingly as the satellite moves, satellite communication modes are classified into a steerable mode (steerable mode) and a non-steerable mode in the industry. In the steerable mode, a coverage area of a beam or a cell of a satellite remains unchanged in a period of time. Conversely, in the non-steerable mode, a coverage area of a beam or a cell of a satellite moves as the satellite moves.

The steerable mode has an advantage that if a moving range of a user terminal (UE, User Equipment) in a beam or a cell is not large, beam switching or cell handover may not be performed within a viewable window time of the satellite. In the non-steerable mode, UE needs to perform beam switching or cell handover more frequently. However, because a relative position relationship between the satellite and the beam or the cell in the non-steerable mode keeps changing, a distance between the satellite and a reference point in the beam or the cell keeps changing, which easily affects timeliness of a common timing advance (Common TA, Common timing advance) determined by the satellite based on the reference point.

**SUMMARY**

Embodiments of this application provide a satellite communication method and a related communication device.

According to a first aspect, an embodiment of this application provides a satellite communication method, which may include: A terminal (a satellite communication terminal) receives a first common timing advance common TA parameter and a first common TA change amount calculation parameter. The first common TA parameter is used to obtain a first common TA. The first common TA change amount calculation parameter is used to update the first common TA to obtain an updated common TA. The terminal sends a random access preamble by using the updated common TA.

The first common timing advance common TA parameter may be the first common TA, or may be any one or more parameters from which the first common TA can be obtained through calculation.

The first common TA change amount calculation parameter may be related to a time at which the random access preamble is sent or a real-time location of a satellite. The first common TA change amount calculation parameter includes, for example, a common TA change amount or a change rate, and certainly may alternatively be another type of common TA change amount calculation parameter.

In some possible implementations, the receiving a first common timing advance common TA parameter and a first common TA change amount calculation parameter may include: receiving a message carrying N groups of common TA parameters and N groups of common TA change amount calculation parameters. The N groups of common TA parameters and the N groups of common TA change amount calculation parameters are in a one-to-one correspondence.

N is a positive integer. For example, N is equal to 1, 2, 3, 3, 4, 5, 8, 9, 10, 12, 13, 53, or another value.

The first common TA parameter is one of the N groups of common TA parameters. Each group of common TA parameters includes one or more common TA parameters.

The first common TA change amount calculation parameter is a common TA change amount calculation parameter corresponding to the first common TA parameter. Each group of common TA change amount calculation parameters includes one or more common TA change amount calculation parameters.

It can be learned that, in the foregoing solution, a common TA used by the terminal to send a random access preamble is obtained by updating a common TA based on a common TA change amount calculation parameter. Because a common TA change amount is considered, the updated common TA is more timely than a fixed common TA, which helps reduce an occurrence probability of related inter-symbol interference, and further helps prevent a random access signal from arriving at a satellite base station earlier, thereby resolving a problem that a TA in an RAR does not support a negative value indication.

In some possible implementations, the first common TA parameter is, for example, one of the N groups of common TA parameters that meets a Doppler threshold determining condition, a Doppler change rate threshold determining condition, or a location interval threshold determining condition.

Specifically, for example, a plurality of Doppler thresholds form a plurality of Doppler threshold intervals, a Doppler threshold interval in which a current Doppler value falls is first determined, and the Doppler threshold interval corresponds to one, that is, the first common TA parameter, of the N groups of common TA parameters. Other cases can be deduced by analogy.

The common TA change amount calculation parameter may be various parameters, which are specifically described below by using examples.

An example is TA_full = TA_common + (t2-t1)*KTA.

TA_full represents the updated common TA, TA common represents the first common TA, the first common TA change amount calculation parameter includes KTA, KTA represents a change rate of the common timing advance over time, t1 represents a sending time of the first common timing advance common TA parameter, and t2 represents a sending time of the random access preamble.

In some possible implementations, the terminal further receives a timestamp. The timestamp is used to indicate the sending time t1 of the first common timing advance common TA parameter.

In some possible implementations, the terminal receives, by using a system information block SIB or remaining minimum system information RMSI, the first common TA or first common TA change amount calculation parameter sent by a network side. The SIB has a modification period. In the modification period, a periodic signal is repeatedly sent without changing content. A start frame of the modification period has a constraint condition. The first common TA or first common TA change amount calculation parameter received by the terminal is updated or changed in the start frame of the modification period. Therefore, the sending time t1 of the first common timing advance common TA parameter may be determined by the start frame of the modification period of the system information block SIB.

Another example is TA_full = TA_common + ΔTA_initial + ΔTA_diff.

TA_full represents the updated common TA, TA common represents the first common TA, the first common TA change amount calculation parameter includes ΔTA_initial and ΔTA_diff, ΔTA_initial represents an initial common timing difference (the initial common timing difference may be a timing advance change amount at a time at which the first random access preamble is allowed to be sent), ΔTA_diff represents a timing advance change amount of t2 relative to ΔTA_initial, and t2 represents a sending time of the random access preamble. When t2 is the time at which the first random access preamble is allowed to be sent, ΔTA_diff is equal to 0.

Another example is TA_full = TA_common + ΔTA1.

TA_full represents the updated common TA, TA common represents the first common TA, the first common TA change amount calculation parameter includes ΔTA1, the first common TA change amount calculation parameter includes common TA change amount calculation parameters respectively corresponding to a plurality of times, ΔTA1 represents a common TA change amount calculation parameter that is included in the first common TA change amount calculation parameter and that corresponds to t2, and t2 represents a sending time of the random access preamble.

According to a second aspect, an embodiment of this application provides a terminal, including:

a receiving unit, configured to receive a first common timing advance common TA parameter and a first common TA change amount calculation parameter, where the first common TA parameter is used to obtain a first common TA, and the first common TA change amount calculation parameter is used to update the first common TA to obtain an updated common TA; and

a sending unit, configured to send a random access preamble by using the updated common TA.

In some possible implementations, the receiving unit is specifically configured to receive a message carrying N groups of common TA parameters and N groups of common TA change amount calculation parameters. The N groups of common TA parameters and the N groups of common TA change amount calculation parameters are in a one-to-one correspondence. N is a positive integer.

The first common TA parameter is one of the N groups of common TA parameters, and each group of common TA parameters includes one or more common TA parameters.

The first common TA change amount calculation parameter is a common TA change amount calculation parameter corresponding to the first common TA parameter, and each group of common TA change amount calculation parameters includes one or more common TA change amount calculation parameters.

In some possible implementations, the first common TA parameter is one of the N groups of common TA parameters that meets a Doppler threshold determining condition, a Doppler change rate threshold determining condition, or a location interval threshold determining condition.

The common TA change amount calculation parameter may be different parameters, which are specifically described below by using examples.

An example is TA_full = TA_common + (t2-t1)*KTA.

TA_full represents the updated common TA, TA common represents the first common TA, the first common TA change amount calculation parameter includes KTA, KTA represents a change rate of the common timing advance over time, t1 represents a sending time of the first common timing advance common TA parameter, and t2 represents a sending time of the random access preamble.

In some possible implementations, the terminal further receives a timestamp. The timestamp is used to indicate the sending time t1 of the first common timing advance common TA parameter.

In some possible implementations, the terminal receives, by using a system information block SIB or remaining minimum system information RMSI, the first common TA or first common TA change amount calculation parameter sent by a network side. The SIB has a modification period. In the modification period, a broadcast is repeatedly sent without changing content. A start frame of the modification period has a constraint condition. The first common TA or first common TA change amount calculation parameter received by the terminal is updated or changed in the start frame of the modification period. Therefore, the sending time t1 of the first common timing advance common TA parameter may be determined by the start frame of the modification period of the system information block SIB.

Another example is TA_full = TA_common + ΔTA_initial + ΔTA_diff.

TA_full represents the updated common TA, TA common represents the first common TA, the first common TA change amount calculation parameter includes ΔTA_initial and ΔTA_diff, ΔTA_initial represents an initial common timing difference (the initial common timing difference may be a timing advance change amount at a time at which the first random access preamble is allowed to be sent), ΔTA_diff represents a timing advance change amount of t2 relative to ΔTA_initial, and t2 represents a sending time of the random access preamble. When t2 is the time at which the first random access preamble is allowed to be sent, ΔTA_diff is equal to 0.

Another example is TA_full = TA_common + ΔTA1.

TA_full represents the updated common TA, TA common represents the first common TA, the first common TA change amount calculation parameter includes ΔTA1, the first common TA change amount calculation parameter includes common TA change amount calculation parameters respectively corresponding to a plurality of times, ΔTA1 represents a common TA change amount calculation parameter that is included in the first common TA change amount calculation parameter and that corresponds to t2, and t2 represents a sending time of the random access preamble.

According to a third aspect, an embodiment of this application provides a satellite communication method, including: A satellite communication device (for example, a satellite or a ground station) obtains a first common timing advance common TA parameter and a first common TA change amount calculation parameter. The satellite communication device sends the first common timing advance common TA parameter and the first common TA change amount calculation parameter. The first common TA parameter is used to obtain a first common TA, the first common TA change amount calculation parameter is used to update the first common TA to obtain an updated common TA, and the updated common TA is used by a terminal to send a random access preamble.

In some possible implementations, the sending the first common timing advance common TA parameter and the first common TA change amount calculation parameter includes: sending a message carrying N groups of common TA parameters and N groups of common TA change amount calculation parameters. The N groups of common TA parameters and the N groups of common TA change amount calculation parameters are in a one-to-one correspondence.

N is a positive integer. For example, N is equal to 1, 2, 3, 3, 4, 5, 8, 9, 10, 12, 13, 53, or another value.

The first common TA parameter is one of the N groups of common TA parameters, and each group of common TA parameters includes one or more common TA parameters.

The first common TA change amount calculation parameter is a common TA change amount calculation parameter corresponding to the first common TA parameter, and each group of common TA change amount calculation parameters includes one or more common TA change amount calculation parameters.

In some possible implementations, the first common TA parameter is, for example, one of the N groups of common TA parameters that meets a Doppler threshold determining condition, a Doppler change rate threshold determining condition, or a location interval threshold determining condition.

According to a fourth aspect, an embodiment of this application provides a satellite communication device, which may include:

an obtaining unit, configured to obtain a first common timing advance common TA parameter and a first common TA change amount calculation parameter; and

a sending unit, configured to send the first common timing advance common TA parameter and the first common TA change amount calculation parameter. The first common TA parameter is used to obtain a first common TA, the first common TA change amount calculation parameter is used to update the first common TA to obtain an updated common TA, and the updated common TA is used by a terminal to send a random access preamble.

In some possible implementations, the sending unit is specifically configured to send a message carrying N groups of common TA parameters and N groups of common TA change amount calculation parameters. The N groups of common TA parameters and the N groups of common TA change amount calculation parameters are in a one-to-one correspondence. N is a positive integer.

The first common TA parameter is one of the N groups of common TA parameters, and each group of common TA parameters includes one or more common TA parameters.

The first common TA change amount calculation parameter is a common TA change amount calculation parameter corresponding to the first common TA parameter, and each group of common TA change amount calculation parameters includes one or more common TA change amount calculation parameters.

According to a fifth aspect, an embodiment of this application provides a satellite communication method, including:

A terminal receives a first reference point location indication. The terminal obtains a common TA through calculation based on a real-time location of a satellite and the first reference point location indication. The terminal sends a random access preamble by using the common TA.

In a possible implementation, the receiving a first reference point location indication includes: receiving a message carrying M reference point location indications. The M reference point location indications include the first reference point location indication, and a first reference point indicated by the first reference point location indication is a reference point closest to the terminal in M reference points.

According to a sixth aspect, an embodiment of this application provides a terminal, which may include:

a receiving unit, configured to receive a first reference point location indication;

a calculation unit, configured to obtain a common TA through calculation based on a real-time location of a satellite and the first reference point location indication; and

a sending unit, configured to send a random access preamble by using the common TA.

In a possible implementation, the receiving a first reference point location indication includes: receiving a message carrying M reference point location indications. The M reference point location indications include the first reference point location indication, and a first reference point indicated by the first reference point location indication is a reference point closest to the terminal in M reference points.

According to a seventh aspect, an embodiment of this application provides a satellite communication method, including:

A satellite communication device obtains a first reference point location indication.

The satellite communication device sends the first reference point location indication. The first reference point location indication is used to obtain a common TA through calculation in conjunction with a real-time location of a satellite, and the common TA is used by a terminal to send a random access preamble.

In a possible implementation, the sending the first reference point location indication includes: sending a message carrying M reference point location indications. The M reference point location indications include the first reference point location indication, and a first reference point indicated by the first reference point location indication is a reference point closest to the terminal in M reference points.

According to an eighth aspect, an embodiment of this application provides a satellite communication device, including:

an obtaining unit, configured to obtain a first reference point location indication; and

a sending unit, configured to send the first reference point location indication. The first reference point location indication is used to obtain a common TA through calculation in conjunction with a real-time location of a satellite, and the common TA is used by a terminal to send a random access preamble.

According to a ninth aspect, an embodiment of this application further provides a satellite communication device (for example, a terminal device, a ground base station, or a satellite), which may include a processor and a memory that are coupled to each other. The processor is configured to invoke a computer program stored in the memory, to perform, for example, some or all steps of any method according to the first aspect, the third aspect, the fifth aspect, or the seventh aspect.

According to a tenth aspect, an embodiment of this application further provides a computer-readable storage medium. The computer-readable storage medium stores a computer program, and the computer program is executed by a processor to complete some or all steps of any method in the foregoing aspects.

According to an eleventh aspect, an embodiment of this application further provides a computer program product including instructions. When the computer program product runs on user equipment, a satellite communication device is enabled to perform some or all steps of the method in the foregoing aspects.

According to a twelfth aspect, an embodiment of this application further provides a communication apparatus, including an input interface circuit, a logic circuit, and an output interface circuit. The logic circuit is configured to perform some or all steps of any method according to the foregoing aspects.

According to a thirteenth aspect, an embodiment of this application further provides a communication apparatus, including at least one input end, a signal processor, and at least one output end, where the signal processor is configured to perform some or all steps of any method in the foregoing aspects.

## BRIEF DESCRIPTION OF DRAWINGS

The following describes some accompanying drawings in embodiments of this application.

FIG. 1-A is a schematic diagram of a scenario of satellite communication according to an embodiment of this application;

FIG. 1-B is a schematic diagram of a scenario of a steerable mode according to an embodiment of this application;

FIG. 1-C is a schematic diagram of a scenario of a non-steerable mode according to an embodiment of this application;

FIG. 1-D is a schematic diagram of broadcasting a common timing advance Common TA by a satellite according to an embodiment of this application;

FIG. 1-E is a schematic diagram of a relationship between a minimum round trip delay and a minimum elevation angle according to an embodiment of this application;

FIG. 1-F is a schematic diagram of timing of uplink random access signals received at different locations according to an embodiment of this application;

FIG. 1-G is a schematic diagram of satellite movement according to an embodiment of this application;

FIG. 1-H is a schematic diagram of a feeder link and a service link in satellite communication according to an embodiment of this application;

FIG. 2 is a schematic flowchart of a satellite communication method according to an embodiment of this application;

FIG. 3-A is a schematic diagram of timing of downlink data frames on a satellite side according to an embodiment of this application;

FIG. 3-B is another schematic diagram of timing of downlink data frames on a satellite side according to an embodiment of this application;

FIG. 3-C is another schematic diagram of timing of downlink data frames on a satellite side according to an embodiment of this application;

FIG. 3-D is another schematic diagram of timing of downlink data frames on a satellite side according to an embodiment of this application;

FIG. 3-E is a schematic diagram of a mapping relationship between a DV value and a parameter group according to an embodiment of this application;

FIG. 3-F is a schematic diagram of another mapping relationship between a DV value and a reference point according to an embodiment of this application;

FIG. 3-G is a schematic diagram of curve fitting of a minimum round trip delay changing over time according to an embodiment of this application;

FIG. 4 is a schematic flowchart of another satellite communication method according to an embodiment of this application;

FIG. 5 is a schematic diagram of a structure of a terminal according to an embodiment of this application;

FIG. 6 is a schematic diagram of a structure of a satellite communication device according to an embodiment of this application;

FIG. 7 is a schematic diagram of a structure of another terminal according to an embodiment of this application;

FIG. 8 is a schematic diagram of a structure of another satellite communication device according to an embodiment of this application;

FIG. 9 is a schematic diagram of a structure of another satellite communication device according to an embodiment of this application;

FIG. 10 is a schematic diagram of a structure of another satellite communication device according to an embodiment of this application;

FIG. 11 is a schematic diagram of a structure of another satellite communication device according to an embodiment of this application;

FIG. 12 is a schematic diagram of determining a timing advance value based on a start frame of a modification period according to an embodiment of this application; and

FIG. 13 is another schematic diagram of determining a timing advance value based on a start frame of a modification period according to an embodiment of this application.

## DESCRIPTION OF EMBODIMENTS

The following describes embodiments of this application with reference to the accompanying drawings in embodiments of this application.

Future terrestrial 5G has a complete industry chain, a large user group, a flexible and efficient application service model, and the like. Therefore, integrating a satellite communication system and a 5G network while complementing strength of each other to form a global seamless integrated communication network of sea, land, space, and air to meet a plurality of ubiquitous service requirements of users is an important direction of communication development in the future.

A user terminal (UE, User Equipment) accesses a data network (DN, Data Network) or the like by accessing a satellite communication network, and uses a service provided by an operator or a third party on the DN.

For ease of description, in the embodiments of this application, a user terminal, user equipment, a terminal device, a terminal, a satellite communication terminal, and the like may be collectively referred to as UE. In other words, unless otherwise specified, UE described below in the embodiments of this application may be replaced with a user terminal, user equipment, a terminal device, a terminal, or a satellite communication terminal (a terminal in a satellite communication scenario). Certainly, they may also be interchanged.

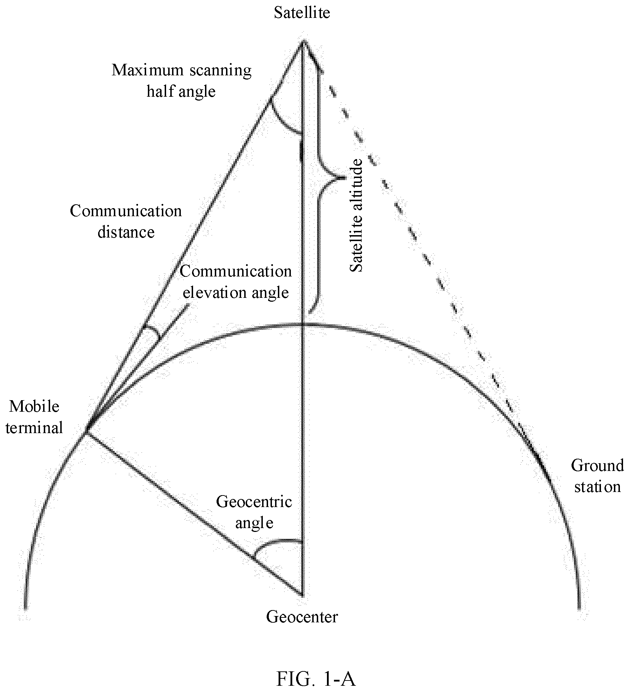

FIG. 1-A shows a schematic diagram of an example scenario of satellite communication. A satellite has a signal processing capability (in a regenerative mode regenerative mode) or transparently forwards (in a transparent mode transparent mode) a user signal to a ground base station (the ground base station may also be referred to as a ground station, a satellite communication ground base station, or the like), to implement a communication scenario of wide-area coverage.

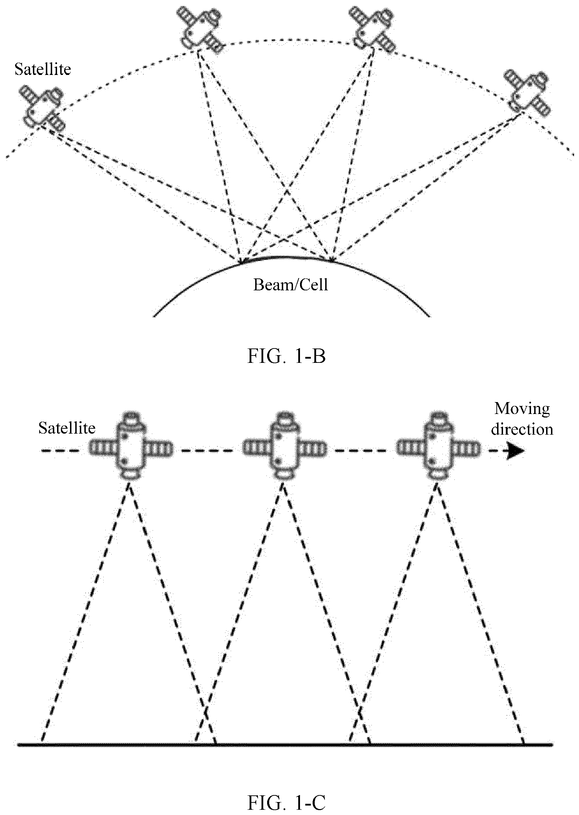

Refer to FIG. 1-B and FIG. 1-C. FIG. 1-B is a schematic diagram of a steerable mode (steerable mode). FIG. 1-C is a schematic diagram of a non-steerable mode. In the steerable mode, a coverage area of a beam or a cell of a satellite remains unchanged in a period of time. In the non-steerable mode, a coverage area of a beam or a cell of a satellite moves as the satellite moves.

The steerable mode has an advantage that if a moving range of a user terminal (UE) in a beam or a cell is not large, beam switching or cell handover may not be performed within a viewable window time of the satellite. In the non-steerable mode, UE needs to perform beam switching or cell handover more frequently. However, because a relative position relationship between the satellite and the beam or the cell in the non-steerable mode keeps changing, a distance between the satellite and a reference point in the beam or the cell keeps changing, which affects timeliness of a common timing advance (Common TA) determined by the satellite based on the reference point.

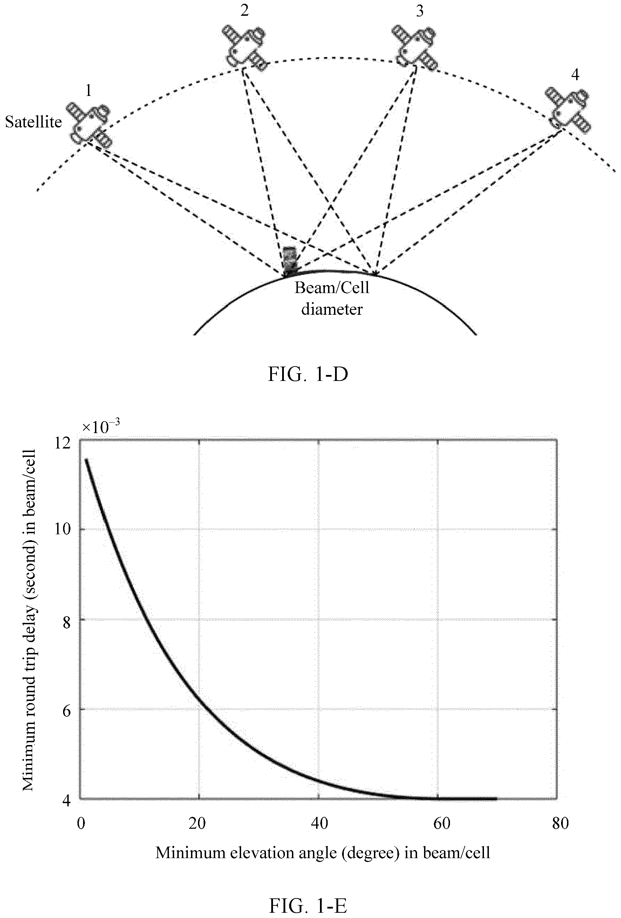

FIG. 1-D shows an example of a possible manner of broadcasting a common timing advance (Common TA) by a satellite. It is assumed that the satellite moves along an orbit, and successively passes through locations 1/2/3/4. At different locations, the satellite broadcasts a common timing advance (Common TA) based on a distance between the satellite and a reference point. The reference point may optionally be a point closest to the satellite in a beam or a cell. The common timing advance may be a round trip delay between the satellite and the reference point.

In satellite communication in the transparent (transparent) mode, as the satellite moves, the distance between the satellite and the reference point changes, and the round trip delay also changes. For example, as shown in FIG. 1-D, the satellite moves from the location 1 to the location 4. FIG. 1-E shows an example of a relationship between a minimum round trip delay in a beam or a cell and a minimum elevation angle in the beam or the cell. As the satellite moves, the minimum elevation angle in the beam or the cell changes. As the satellite moves, the minimum round trip delay changes.

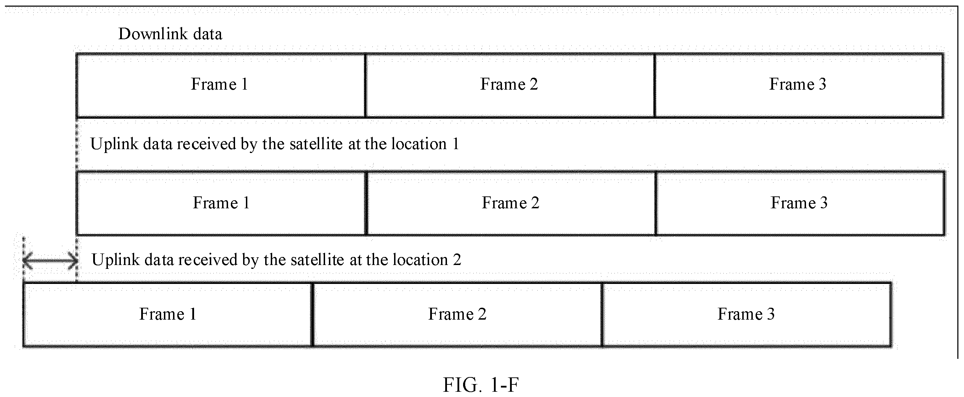

A maximum round trip delay change rate is 40 us/s when the satellite moves. As shown in FIG. 1-D, the satellite broadcasts a common timing advance at the location 1, and after 160 ms, the satellite moves to another location, such as the location 2. In this case, the distance between the satellite and the reference point changes and the distance becomes smaller. If UE near the reference point at this time sends a random access preamble (preamble) by using the common timing advance broadcast by the satellite at the location 1, a timing advance used by the UE is greater than a round trip delay between the UE and the satellite, about 6.4 us. This causes inter-symbol interference (ISI, Inter-Symbol Interference) between signals. As shown in FIG. 1-F, a received preamble arrives earlier than an expected arrival timing, and interferes with reception of a previous signal. In addition, in a random access process, a timing advance command (TA Command, Timing Advance Command) in a random access response (RAR, Random Access Response) sent by the ground base station to the UE can indicate only a positive value. Therefore, when the UE sends a message 3 (message 3) for contention resolution, a timing adjustment cannot be accurately performed on the message 3.

The random access preamble may also be referred to as a random access preamble signal, an uplink random access preamble, or an uplink random access preamble signal.

In satellite communication in the steerable mode, the satellite broadcasts a common timing advance to be used by UE to send a preamble. However, as the satellite moves, the common timing advance that has been broadcast may be greater than a common timing advance that actually needs to be used when the UE sends the preamble, which causes problems of ISI and an inaccurate timing advance of a subsequent uplink signal, that is, a timeliness problem of the common timing advance.

The following further discusses how to resolve a problem that ISI may occur or more time-frequency resources may be occupied; how to resolve a problem that a TA command carried in an RAR cannot indicate a negative value, so that an uplink timing of a message 3 cannot be accurately adjusted; and the like.

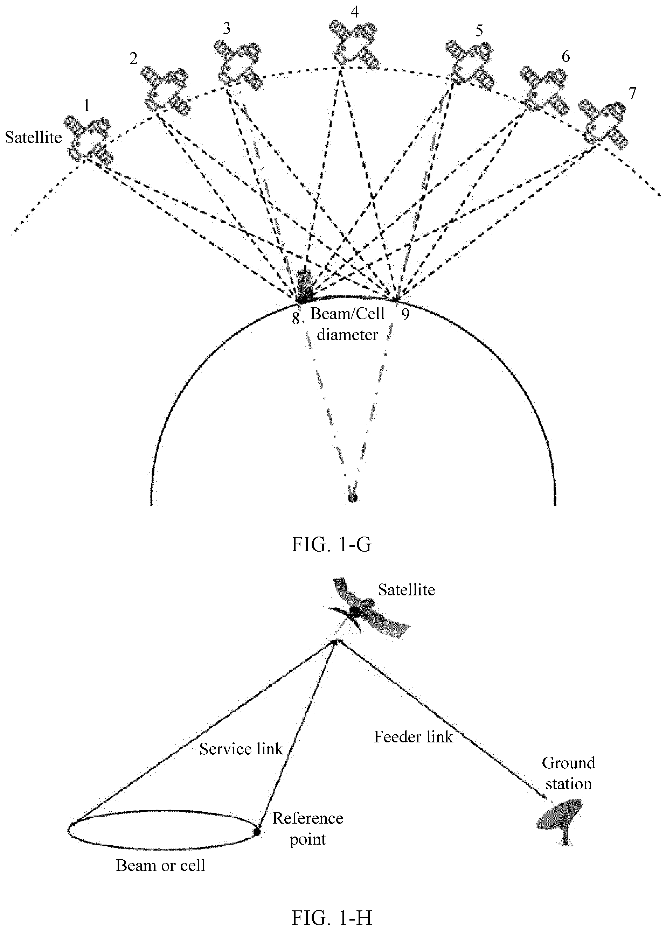

The solutions of the following embodiments may be applied to non-terrestrial communication (such as a satellite communication system). Specifically, the solutions may be applied to a service link (service link) in the steerable mode in non-terrestrial communication, and may also be applied to a feeder link (feeder link) in the non-steerable mode or the steerable mode. FIG. 1-H is a schematic diagram of a feeder link and a service link in satellite communication according to an embodiment of this application. Certainly, the solutions may also be applied to a terrestrial communication scenario in which a cell is relatively large and UE and a base station move relative to each other at a fast speed. The following mainly uses a scenario of a satellite communication system for description.

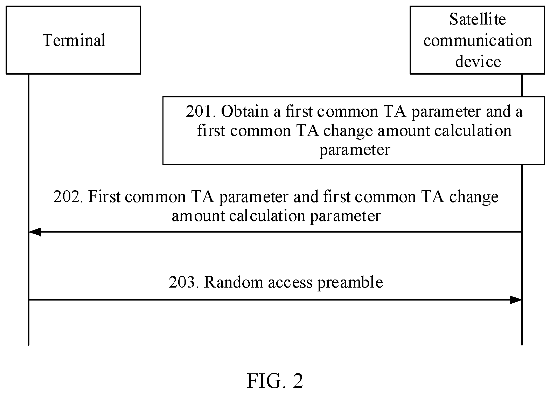

FIG. 2 is a schematic flowchart of an example satellite communication method according to an embodiment of this application. The satellite communication method may include the following steps:

201. A satellite communication device (for example, a satellite or a satellite ground station) obtains a first common TA parameter and a first common TA change amount calculation parameter. The satellite communication device sends (for example, through broadcast or unicast) the first common TA parameter and the first common TA change amount calculation parameter.

The first common TA parameter is used to obtain a first common TA, and the first common TA change amount calculation parameter can be used to update the first common TA to obtain an updated common TA. The updated common TA is used by a terminal to send a random access preamble.

The first common timing advance common TA parameter may be the first common TA, or may be any one or more parameters from which the first common TA can be obtained through calculation.

The first common TA change amount calculation parameter is related to a time at which the random access preamble is sent or a real-time location of the satellite.

The common TA change amount calculation parameter (for example, a common timing advance change rate or a common timing advance change amount) may be sent (through broadcast or multicast) to the UE by using, for example, at least one of information blocks such as a system information block 1 (System Information Block, SIB) SIB1, remaining minimum system information (Remaining Minimum SI, RMSI), other system information (Other System Information, OSI), or a main information block (Main Information Block, MIB). If the parameter is sent in a radio resource control (Radio Resource Control, RRC) connection stage, the network side may additionally transmit the parameter in at least one of RRC, downlink control information (Downlink Control Information, DCI), group DCI, a media access control (Media Access Control, MAC) element, or a timing advance command (Timing Advance Command, TAC), or together with data, or in a physical downlink shared channel (Physical Downlink Shared Channel, PDSCH) that is separately allocated.

202. The terminal receives the first common timing advance common TA parameter and the first common TA change amount calculation parameter that are sent by the satellite communication device.

The first common TA parameter is used to obtain a first common TA, and the first common TA change amount calculation parameter is used to update the first common TA to obtain an updated common TA.

For example, the terminal may update the first common TA by using the first common TA change amount calculation parameter to obtain an updated common TA.

203. The terminal sends a random access preamble by using the updated common TA.

The receiving the first common timing advance common TA parameter and the first common TA change amount calculation parameter includes, for example, receiving a message carrying N groups of common TA parameters and N groups of common TA change amount calculation parameters. The N groups of common TA parameters and the N groups of common TA change amount calculation parameters are in a one-to-one correspondence.

N is a positive integer. For example, N is equal to 1, 2, 3, 3, 4, 5, 8, 9, 10, 12, 13, 53, or another value.

The first common TA parameter is one of the N groups of common TA parameters, and each group of common TA parameters includes one or more common TA parameters.

The first common TA change amount calculation parameter is a common TA change amount calculation parameter corresponding to the first common TA parameter, and each group of common TA change amount calculation parameters includes one or more common TA change amount calculation parameters.

It may be understood that, when a plurality of groups of common TA parameters are received, a group of common TA parameters that meets a condition may be selected from the groups based on a filtering criteria. Specifically, for example, the first common TA parameter is one of the N groups of common TA parameters that meets a Doppler threshold determining condition, a Doppler change rate threshold determining condition, or a location interval threshold determining condition.

There may be various manners of updating the first common TA by using the first common TA change amount calculation parameter to obtain the updated common TA.

An example is TA_full = TA_common + (t2-t1)*KTA.

TA_full represents the updated common TA, TA common represents the first common TA, the first common TA change amount calculation parameter includes KTA, KTA represents a change rate of the common timing advance over time, t1 represents a sending time (which, for example, may be obtained from ephemeris information) or a receiving time of the first common timing advance common TA parameter, and t2 represents a sending time of the random access preamble.

Another example is TA_full = TA_common + ΔTA_initial + ΔTA_diff.

TA_full represents the updated common TA, TA common represents the first common TA, the first common TA change amount calculation parameter includes ΔTA_initial and ΔTA_diff, ΔTA_initial represents an initial common timing difference (the initial common timing difference may be a timing advance change amount at a time at which the first random access preamble is allowed to be sent), ΔTA_diff represents a timing advance change amount of t2 relative to ΔTA_initial, and t2 represents a sending time of the random access preamble. When t2 is the time at which the first random access preamble is allowed to be sent, ΔTA_diff is equal to 0.

Another example is TA_full = TA_common + ΔTA1.

TA_full represents the updated common TA, TA common represents the first common TA, the first common TA change amount calculation parameter includes ΔTA1, the first common TA change amount calculation parameter includes common TA change amount calculation parameters respectively corresponding to a plurality of times, ΔTA1 represents a common TA change amount calculation parameter that is included in the first common TA change amount calculation parameter and that corresponds to t2, and t2 represents a sending time of the random access preamble.

It can be learned that, in the foregoing solution, a common TA used by the terminal to send a random access preamble is obtained by updating a common TA based on a common TA change amount calculation parameter. Because a common TA change amount is considered, the updated common TA is more timely than a fixed common TA, which helps reduce an occurrence probability of related inter-symbol interference, and further helps prevent a random access signal from arriving at a satellite base station earlier, thereby resolving a problem that a TA in an RAR does not support a negative value indication.

Some more specific application scenarios are used as examples for description below.

Referring to FIG. 1-G, it is assumed that the satellite moves from a location 1 to a location 7 and an orbit of the satellite is circular. It is assumed that the satellite broadcasts a common TA at the location 1/2/3/4/5/6/7 for the UE to send a random access preamble. Points 8 and 9 are the closest and furthest points to the satellite. Depending on a different location of the satellite, 8 may become the furthest point and 9 may become the closest point. The satellite may determine a reference point used when a common TA is calculated, which may optionally be a point closest to the satellite in a beam or a cell. For example, when the satellite is at the location 1, the satellite calculates a round trip delay by using the point 1 and the point 8, and broadcasts the round trip delay as a value of the common TA. It should be noted that, the value of the common TA may have an offset value added or subtracted (the offset value considers an altitude of the UE) before broadcast. The common TA parameter may alternatively be represented in a form of, for example, a one-way delay, a one-way distance, or a round trip distance.

In this case, it is assumed that the common TA parameter is the common TA broadcast by the satellite.

The UE may send the random access preamble by using a full TA (full TA) or a UE-specific TA (UE-specific TA). The full TA represents a timing advance value used by the UE when the network side (the satellite or the base station) does not perform delay compensation on a received uplink signal sent by the UE. The UE-specific TA represents a timing advance value used by the UE when the network side performs delay compensation on a received uplink signal sent by the UE. The performing, by the network side, delay compensation on an uplink signal may be understood as performing delay processing on a receive window for receiving the uplink signal sent by the UE.

The following first uses an example in which the UE sends the random access preamble by using a full TA (full TA). The common TA change amount calculation parameter may be a common TA change rate KTA, a common TA change amount, or the like.

In a possible implementation, the common TA change rate KTA may be used as the common TA change amount calculation parameter, to obtain a timing advance full TAused when the UE sends the random access preamble. The following uses an example in which the common TA change amount calculation parameter includes the common TA change rate KTA.

When broadcasting the common TA, the satellite base station further broadcasts the common TA change rate KTA, to be used by the UE to update the common TA when sending the random access preamble.

The full TA used by the UE to send the random access preamble may specifically have the following possible meanings:

In a regenerative (regenerative) scenario, the full TA used by the UE may be a TA of a service link part.

In a transparent (transparent) scenario, if the network side (for example, the satellite) does not compensate for a round trip delay of a feeder link part, the full TA used by the UE may be a TA of a service link + feeder link part.

In the transparent scenario, if the network side (for example, the satellite) compensates for the round trip delay of the feeder link part, the full TA used by the UE may be a TA of the service link part.

For example, on the UE side, the UE may determine, based on the common TA and the common timing advance change rate KTA, the timing advance full TA used when the random access preamble is sent.

A specific example is $TA\_full = TA\_common + (t2-t1)*KTA$.

$TA\_common$ represents the common timing advance received by the UE from the network side.

$t1$ is a time at which the satellite sends $TA\_common$. When the satellite broadcasts ephemeris information and TA common at the same time, the ephemeris information may carry a time at which the ephemeris information is sent. Based on this, a time at which the satellite sends $TA\_common$ may also be learned. Alternatively, it may be agreed that t1 represents a time at which the UE receives $TA\_common$, and the satellite needs to compensate for a delay of a signal from the satellite to the UE when sending TA common, that is, adjust TA common by using an offset value when sending TA common. Alternatively, if without assistance of ephemeris information, the satellite base station further sends a timestamp when broadcasting TA common. The timestamp indicates the time t1 at which $TA\_common$ is broadcast.

In a possible implementation, as described above, the UE may obtain a value of the common timing advance $TA\_common$ through broadcast, and the time t1 at which TA common is sent is equal to a sending time of a broadcast message carrying TA common.

In a possible implementation, the time represented by t1 may be an absolute time or a relative time. For example, when t1 is an absolute time, it may be a coordinated universal time (Coordinated Universal Time, UTC). When t1 is relative time, it may be a time relative to the network side (which may be the ground station or the satellite), that is, $t1=tx+t0$, tx represents an absolute time on the network side, and t0 represents a difference relative to the absolute time on the network side. The difference may be a fixed time value or a variable time value (which may be a positive value, a negative value, or zero).

In a possible implementation, the network side (which may be the satellite or the ground station) performs delay compensation when receiving a signal sent by the UE (that is, the network side performs a delay operation on a receive window for receiving the signal sent by the UE). A delay compensation value may be equal to or not equal to the round trip delay of the feeder link. In this case, t0 may be equal to delay compensation performed by the network side on the received signal sent by the UE. If the delay compensation value is equal to the round trip delay of the feeder link, a value of t0 is equal to the round trip delay of the feeder link.

It may be understood that, after receiving the timestamp t1, the UE obtains, based on the timestamp t1, a timing advance value used to send the uplink signal.
t2 represents a time at which the UE sends the uplink random access preamble by using the full TA.

It may be understood that t2 represents a time at which the UE sends the uplink signal, and the time may be an absolute time or a relative time. For example, the absolute time may be a UTC time at which the UE sends the uplink signal. Alternatively, the relative time may be a time at which the network side receives the uplink signal after the UE sends the uplink signal, for example, a UTC time at which the network side receives the uplink signal.

In a possible implementation, the common TA change amount may be used as the common TA change amount calculation parameter, to obtain a timing advance full TAused when the UE sends the random access preamble. The following then uses an example in which the common TA change amount calculation parameter is the common TA change amount.

For example, when broadcasting the common TA, the satellite base station broadcasts timing advance differences $\Delta TA1$, $\Delta TA2$, $\Delta TA3$... corresponding to random access occasions (RO, RACH occasion), so that the UE updates a used timing advance value when sending the random access preamble.

On the UE side, the UE determines, based on the common TA and the timing advance difference $\Delta TA$, the timing advance full TA used when the random access preamble is sent.

The UE determines a used timing advance based on a used random access occasion:

$$TA\_full = TA\_common + \Delta TA1 \text{ (the UE sends the random access preamble at RO1)}$$

$$TA\_full = TA\_common + \Delta TA1 + \Delta TA2 \text{ (the UE sends the random access preamble at RO2)}$$

$$TA\_full = TA\_common + \Delta TA1 + \Delta TA2 + \Delta TA3 \text{ (the UE sends the random access preamble at RO3)}$$

$$TA\_full = TA\_common + \Delta TA1 + \Delta TA2 + \Delta TA3 + \Delta TA4 \text{ (the UE sends the random access preamble at}$$

RO3)

$$TA\_full = TA\_common + \Delta TA1 + \Delta TA2 + \Delta TA3 + \Delta TA4 \ldots + \Delta TAn \text{ (the UE sends the random access}$$

preamble at ROn)

TA _common represents a common timing advance value received by the UE. $\Delta TA1$ and $ATA2$ represent common TA change amounts between ROs. RO1 is a time at which the first random access preamble is allowed to be sent, RO2 is a time at which the second random access preamble is allowed to be sent, and so on.

For another example, $\Delta TA1$, $\Delta TA2$, and the like may alternatively be used to represent common TA change amounts between the time at which the satellite base station sends the common TA and different RO times. Therefore, that the UE determines a used timing advance based on a used random access occasion is expressed as follows:

$$TA\_full = TA\_common + \Delta TA1 \text{ (the UE sends the random access preamble at RO1)}$$

$$TA\_full = TA\_common + \Delta TA2 \text{ (the UE sends the random access preamble at RO2)}$$

$$TA\_full = TA\_common + \Delta TA3 \text{ (the UE sends the random access preamble at RO3)}$$

$$TA\_full = TA\_common + \Delta TA4 \text{ (the UE sends the random access preamble at RO4)}$$

$$TA\_full = TA\_common + \Delta TAn \text{ (the UE sends the random access preamble at ROn)}$$

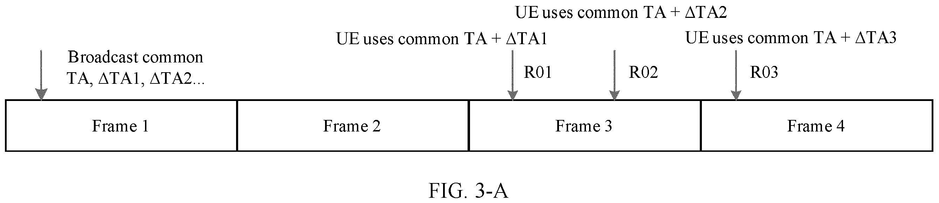

FIG. 3-A is a schematic diagram of timing of downlink data frames on a satellite side. Referring to FIG. 3-A, when sending random access signals at different ROs, the UE uses corresponding updated common TA values. UE without a global navigation satellite system (Global Navigation Satellite System, GNSS) function may calculate a full TA based on the foregoing method (for example, a global positioning system (Global Positioning System, GPS) is a type of GNSS), and sends a random access preamble by using the full TA. UE with a GPS may calculate a TA based on an ephemeris and location information of the UE. On the satellite base station side, random access preambles received at different ROs respectively correspond to random access preambles sent by using different updated common TAs.

For another example, when broadcasting the common TA, the satellite base station broadcasts an initial common timing difference $\Delta TA\_initial$ and a timing advance difference $\Delta TA\_diff$ related to a random access occasion, so that the UE updates a used timing advance value when sending the random access preamble.

When the UE side calculates the common timing advance or a compensated common timing advance of the network side:

$$TA\_full = TA\_common + \Delta TA\_initial \text{ (the preamble is sent at RO1)}$$

$$TA\_full = TA\_common + \Delta TA\_initial + \Delta TA\_diff \text{ (the preamble is sent at RO2)}$$

$$TA\_full = TA\_common + \Delta TA\_initial + 2*\Delta TA\_diff \text{ (the preamble is sent at RO3)}$$

$$TA\_full = TA\_common + \Delta TA\_initial + (n–1)*\Delta TA\_diff \text{ (the preamble is sent at ROn)}$$

$\Delta TA\_initial$ represents a common TA change amount when the UE sends the random access preamble at RO1.

$\Delta TA\_diff$ represents a common TA change amount of the UE within a time interval length between two adjacent ROs.

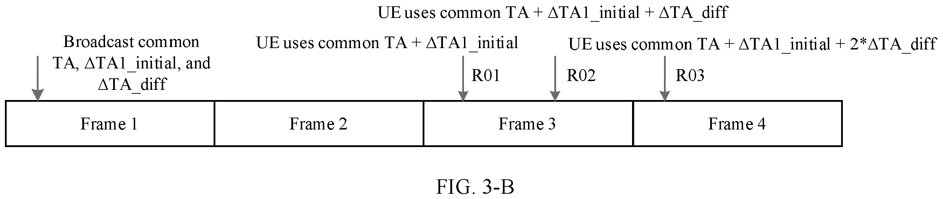

FIG. 3-B is another schematic diagram of timing of downlink data frames on a satellite side. Referring to FIG. 3-B, when sending random access signals at different ROs, the UE uses corresponding updated common TA values. UE without a GPS may calculate a full TA based on the foregoing method, and sends a random access preamble by using the full TA. UE with a GPS may calculate a TA based on an ephemeris and location information of the UE. On the satellite base station side, random access preambles received at different ROs respectively correspond to random access preambles sent by using different updated common TAs.

The following then uses an example in which the UE sends the random access preamble by using a UE-specific TA (UE-specific TA). The common TA change amount calculation parameter may be a common TA change rate KTA, a common TA change amount, or the like.

In a possible implementation, the common TA change rate KTA may be used as the common TA change amount calculation parameter to obtain a UE-specific TA. The following uses an example in which the common TA change amount calculation parameter includes the common TA change rate KTA.

The satellite side compensates for the common timing advance of the uplink signal, that is, the satellite base station delays the receive window by the common timing advance when receiving the uplink signal. The UE side does not need to perform timing advance compensation for this part of delay. However, as the satellite moves, the common delay by which the satellite compensates the uplink signal changes. For example, when the satellite moves from the location 1 to the location 2, the common delay of the uplink signal gradually decreases.

In this case, the UE needs to compensate for only a delay excluding the common timing advance. UE without a positioning capability may directly send a random access preamble. If the UE has a positioning capability, the UE may calculate a full TA based on ephemeris information and location information of the UE, and then subtract a compensated common timing advance (Compensated Common TA) of the satellite side. Herein, TA compensated is used to represent the compensated common timing advance of the satellite side.

To help UE with a positioning capability to calculate a UE-specific TA that should be used by the UE, the satellite may broadcast a value of the compensated common TA of the satellite. The satellite may determine the compensated common TA based on a location of the satellite and a location of a reference point, for example, based on a round trip delay between the locations of the satellite and the reference point, or an offset value (the offset value may consider an altitude or the like of the UE) may be added or subtracted based on the round trip delay.

When broadcasting TA compensated of the satellite base station, the satellite base station broadcasts a change rate KTA of TA_compensated, so that the UE with a positioning function calculates a timing advance adjustment value that needs to be used by the UE, and sends random access data by using the timing advance adjustment value.

The compensated common timing advance TA compensated of the network side may be calculated based on the following formula:

$$TA\_compensated = TA\_common + (t2–t1)*KTA$$

TA_common is a common timing advance compensated at a time t1 and broadcast by the satellite.

t1 is a time at which the satellite sends the common timing advance. When the satellite broadcasts ephemeris information and the common timing advance at the same time, the ephemeris information may carry a time at which the ephemeris information is sent. Based on this, a time at which the satellite sends the common timing advance may also be learned. Alternatively, it may be agreed that t1 represents a time at which the UE receives the common timing advance, and the satellite needs to compensate for a delay of a signal from the satellite to the UE when sending the common timing advance, that is, adjust the common timing advance by using an offset value when sending the common timing advance. Alternatively, if without assistance of ephemeris information, the satellite sends a timestamp when broadcasting the common timing advance. The timestamp indicates the time at which the common timing advance is broadcast.

In a possible implementation, the satellite sends a value of TA common through broadcast, and the time t1 at which TA_common is sent is equal to a sending time of a broadcast message carrying TA common.

In a possible implementation, the time represented by t1 may be an absolute time or a relative time. For example, when t1 is an absolute time, it may be a UTC time. When t1 is relative time, it may be a time relative to the network side (which may be the ground station or the satellite), that is, t1=tx+t0, tx represents an absolute time on the network side, and t0 represents a difference relative to the absolute time on the network side. The difference may be a fixed time value or a variable time value (which may be a positive value, a negative value, or zero). t2 represents a time at which the UE sends the uplink random access preamble by using the UE-specific TA. Alternatively, t2 is a time at which the satellite base station receives the random access preamble. Because the UE may calculate, by using ephemeris information and location information of the UE, a propagation delay of a signal from the UE to the satellite base station, the time at which the satellite receives the random access preamble may be obtained.

Assuming that TA_cal is a calculated timing advance obtained by the UE through calculation based on the ephemeris information and the location information of the UE, TA compensated is subtracted to obtain a UE-specific TA to be used, which is represented as TA speci.

That is, TA speci = TA_cal - TA compensated.

If the UE may use the full TA or the UE-specific TA, when broadcasting the common TA, the network side may indicate to the UE whether to use the full TA or the UE-specific TA.

In a possible implementation, the common TA change rate KTA may be used as the common TA change amount calculation parameter to obtain a UE-specific TA. The following uses an example in which the common TA change amount calculation parameter includes the common TA change amount.

When broadcasting the compensated common timing advance TA_compensated, the satellite base station broadcasts timing advance differences ΔTA1, ΔTA2, ΔTA3... corresponding to random access occasions, so that the UE updates a used timing advance value when sending the random access preamble.

The compensated common timing advance TA compensated of the network side may be calculated based on the following formula:

$$TA\_compensated = TA\_common + \Delta TA1 \text{ (the UE sends the random access preamble at RO1)}$$

$$TA\_compensated = TA\_common + \Delta TA1 + \Delta TA2 \text{ (the UE sends the random access preamble at RO2)}$$

$$TA\_compensated = TA\_common + \Delta TA1 + \Delta TA2 + \Delta TA3 \text{ (the UE sends the random access preamble at RO3)}$$

$$TA\_compensated = TA\_common + \Delta TA1 + \Delta TA2 + \Delta TA3 + \Delta TA4 \text{ (the UE sends the random access preamble at RO3)}$$

$$TA\_compensated = TA\_common + \Delta TA1 + \Delta TA2 + \Delta TA3 + \Delta TA4... + \Delta TAn \text{ (the UE sends the random access preamble at ROn)}$$

TA_common represents a common timing advance value received by the UE. ΔTA1 and ΔTA2 represent common TA change amounts between ROs.

Assuming that TA_cal is a calculated timing advance obtained by the UE through calculation based on the ephemeris information and the location information of the UE, TA compensated is subtracted to obtain a UE-specific TA to be used, which is represented as TA speci.

That is, TA speci = TA_cal - TA compensated.

If the UE may use the full TA or the UE-specific TA, when the common TA is broadcast, the UE may be indicated whether to use the full TA or the UE-specific TA.

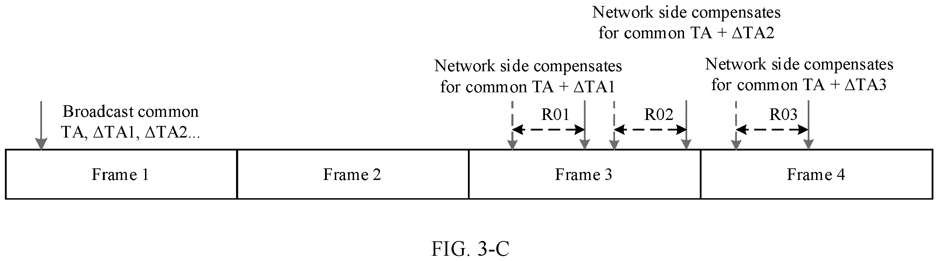

FIG. 3-C is another schematic diagram of timing of downlink data frames on a satellite side. Referring to FIG. 3-C, when receiving a random access signal, the satellite base station side may correspondingly compensate for an updated common TA.

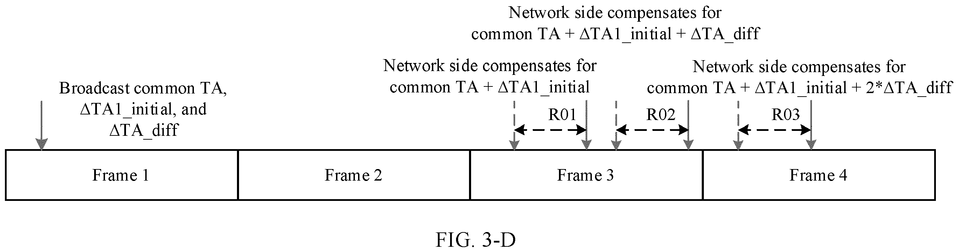

FIG. 3-D is another schematic diagram of timing of downlink data frames on a satellite side. Referring to FIG.

3-D, when receiving a random access signal, the satellite base station side may correspondingly compensate for an updated common TA.

An embodiment of this application further provides a method for implicitly indicating a sending time and calculating a timing advance. That is, the sending time at which the network side sends TA_common may be implicitly represented.

A broadcast signal (for example, a SIB1, a SIB2, a SIB3, or RMSI) sent by the network side has a modification period (modification period). In the modification period, a periodic signal is repeatedly sent without changing content. A start frame of the modification period has a constraint condition. For example, the start frame of the modification period satisfies SFN mod m = 0. SFN represents a system frame number (system frame number), mod represents a modulo operation, and m is a quantity of system frames of one modification period. If m=16, updated broadcast information is sent only when the system frame number is a multiple of 16, such as 16, 32, or 48, that is, these frame numbers are start frames of modification periods.

When the network side sends the common timing advance value TA_common or the change rate KTA in a broadcast message, if the value of TA common or KTA is updated or changed, the value of TA common or the value of KTA also starts to be updated in the start frame of the modification period.

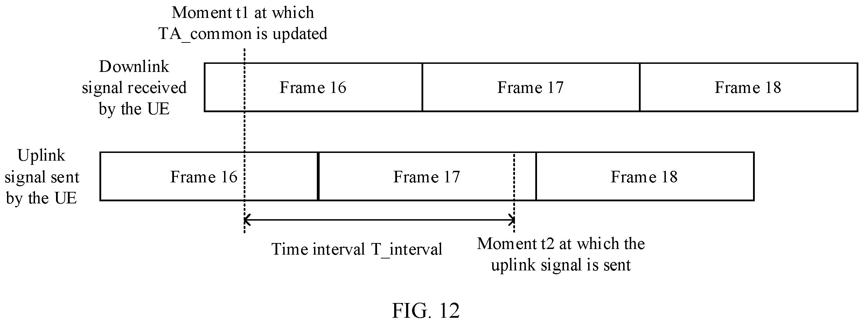

Therefore, the UE may obtain, through calculation by using information about the start frame, a timing advance value used to send an uplink signal (for example, send a random access preamble). For example, the base station or the network side (which may be the ground station or the satellite) updates the value of TA_common in a subframe in a system frame 16. As shown in FIG. 12, a time t1 at which updated TA common is sent for the first time may be obtained, that is, the system frame 16 is the start frame of the modification period. After receiving the updated value of TA_common, the UE sends an uplink signal in an uplink frame 17. A time at which the uplink signal is sent is t2. Further, a time interval T_interval=t2-t1 may be obtained based on a difference between a time at which the uplink signal is sent and a time at which the UE side receives TA _common. A timing advance value TA_value used by the UE to send the uplink signal is TA_value = TA_common + T_interval*KTA.

Specifically, the UE may obtain, based on a system information modification notification, whether system information is updated in a system message in a next modification period. System information that may be updated includes the SIB1, the SIB2, the SIB3, or the like.

In a possible implementation, the time t1 shown in FIG. 12 may be a time at which the UE receives TA_common in the start frame of the modification period. When sending TA common, the base station (satellite or ground station) may compensate for a TA_common change caused by a location change during the propagation delay between the base station and the UE. Alternatively, the time t1 may be a time at which the base station (satellite or ground station) sends TA common in the start frame of the modification period. It may be understood that the time t2 shown in FIG. 12 may be a time at which the UE sends the uplink signal.

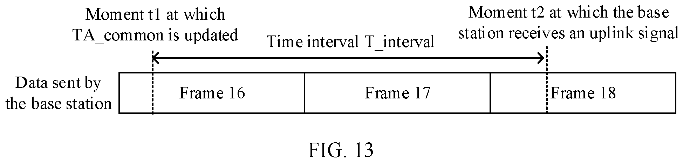

In a possible implementation, as shown in FIG. 13, the time t1 at which TA_common is updated is a time at which the base station (satellite or ground station) sends TA_common in the start frame of the modification period. In FIG. 13, the base station receives the uplink signal at a time t2. The UE side can obtain a time interval T_interval based on a location of a frame in which the uplink signal is sent and a location of a frame in which the UE receives a downlink signal. The UE calculates, based on TA_value = TA_common + T_interval*KTA, a timing advance value TA_value to be used.

It may be understood that, when the UE sends the random access preamble by using the full TA (full TA), a used timing advance value is TA_full = TA_common + (t2-t1)*KTA, and t1 and t2 may also be determined based on the start frame of the modification period.

It may be understood that, when the UE sends the random access preamble by using the UE-specific TA (UE-specific TA), a compensated common timing advance of the network side is TA compensated = TA_common + (t2-t1)*KTA, and t1 and t2 may also be determined based on the start frame of the modification period.

According to the method of obtaining a TA common change amount by using a modification period, the sending time t1 at which the network side sends TA common is implicitly represented, and the network side does not need to send t1 in a manner such as sending a timestamp, thereby reducing signaling overheads.

In some other scenarios, there are a plurality of reference points in one beam or cell, and common TAs of the plurality of reference points and corresponding common TA change rates KTA are broadcast at the same time. When there are a plurality of reference points in one beam or cell, the satellite base station may broadcast, at the same time, common timing advances obtained based on these reference points and a change rate corresponding to each common timing advance. At the same time, the satellite base station broadcasts a determining threshold corresponding to these common timing advances, such as a Doppler (Doppler) threshold, a Doppler change rate threshold, or a plurality of location interval thresholds. The UE determines, based on a Doppler shift value, a Doppler change rate value, or rough positioning information obtained by detecting a downlink signal, a common timing advance and a common timing advance change rate that should be used by the UE.

It is assumed that the satellite (in the regenerative mode) moves from a location 1 to a location 7 and an orbit of the satellite is circular. It is assumed that the satellite broadcasts a common TA at the location 1/2/3/4/5/6/7 for the UE to send a random access signal.

On the satellite base station side, when there are a plurality of reference points, common TAs of the plurality of reference points and corresponding common TA change rates are broadcast at the same time. To enable the UE to discriminately use a group of common TA and common TA change rate, a corresponding determining threshold such as a Doppler (Doppler) threshold, a Doppler change rate threshold, or a plurality of location interval thresholds needs to be broadcast.

On the UE side, the UE determines, based on a Doppler shift value, a Doppler change rate value, or rough positioning information obtained by detecting a downlink signal, a common timing advance and a common timing advance change rate that should be used by the UE.

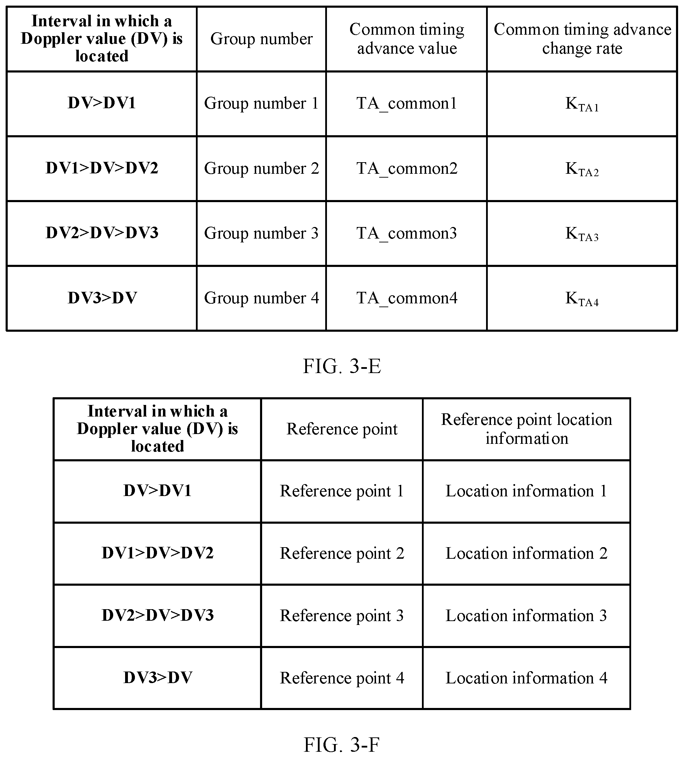

For example, the base station broadcasts four groups of common TAs and common TA change rates, as shown in FIG. 3-E, and corresponding determining thresholds (Doppler values) DV1, DV2, and DV3. When detecting that frequency offsets DV of downlink signals are within different ranges, the UE selects corresponding groups of common timing advance values and common timing advance change rates, as shown in FIG. 3-E.

It should be noted that the method of discriminately using a parameter corresponding to a reference point in this scenario is also applicable to other scenarios of the present invention.

Alternatively, referring to FIG. 3-F, it is assumed that the satellite (in the regenerative mode) moves from a location 1 to a location 7 and an orbit of the satellite is circular.

On the network side, the satellite broadcasts location information of a reference point in a covered beam or cell.

On the UE side, UE without a GPS calculates, based on a reference point location and the ephemeris information of the satellite, a common timing advance value used when an access preamble is sent. UE with a GPS may calculate, based on the ephemeris information and location information of the UE, a timing advance value used when an access preamble is sent.

When there are a plurality of reference points in one beam or cell, on the network side, the satellite broadcasts, to the beam or cell at the same time, locations of the plurality of reference points and a corresponding determining threshold, such as a Doppler (Doppler) threshold, a Doppler change rate threshold, or a plurality of location interval thresholds.

On the UE side, the UE determines, based on a Doppler shift value, a Doppler change rate value, or rough positioning information obtained by detecting a downlink signal, a reference point location that should be used by the UE, and then calculates, in combination with the ephemeris information of the satellite, a common TA used when a random access signal is sent.

UE without a GPS calculates, based on the reference point location and the ephemeris information of the satellite, a common timing advance value used when an access preamble is sent. UE with a GPS may calculate, based on the ephemeris information and location information of the UE, a timing advance value used when an access preamble is sent.

For example, the satellite base station broadcasts locations of four reference points in one beam, as shown in FIG. 3-F, and corresponding determining thresholds (Doppler values) DV1, DV2, and DV3. When detecting that frequency offsets DV of downlink signals are within different ranges, the UE selects corresponding reference points and location information of the reference points, as shown in FIG. 3-F.

In addition, the satellite is connected to a ground station in a period of time to transmit data. In the steerable mode and the non-steerable mode, as the satellite moves, a distance between the satellite and the ground station changes, which affects a common TA or delay of a UE-satellite-ground station link.

In the non-steerable mode, a common delay of a service link remains unchanged, and a common delay of a feeder link changes.

In the steerable mode, the common delay of the service link changes, and the common delay of the feeder link changes.

When the satellite base station side needs to broadcast the delay of the feeder link and a corresponding change, the foregoing example solutions and embodiments of this application may be used similarly.

The base station may broadcast location information of the ground station, so that the UE calculates delay information of the feeder link. The UE may adjust a TA by using a sum of the delay of the feeder link and the delay of the service link, to send a random access preamble.

In addition, the network side may broadcast a common timing advance change function or a timing advance change rate function to the UE, and the UE updates a used common timing advance by using the function. For example, the network side may broadcast coefficients of a common timing advance change function to the UE, and the UE generates a function by using these coefficients. The satellite base station broadcasts, to the UE, five coefficients of a unary quartic polynomial function: $a=1.239e-16$, $b=-1.221e-12$, $c=4.877e-09$, $d=-9.499e-06$, and $e=0.01153$, respectively. Optionally, the network side may broadcast a start time t0 of the function, and the UE substitutes the time t0 into the function to calculate a common timing advance change. Alternatively, the UE may learn, by using the ephemeris information, a time at which the coefficients of the function are sent, and calculate a common timing advance change by substituting the time as a start time into the function. Alternatively, a common timing advance change is calculated by substituting, into the function, the time at which the UE receives the coefficients of the function, represented as 0 seconds.

The UE side generates a function by using these coefficients and an agreed function expression:

$$Y=a*x4+b*x3+c*x2+d*x+e$$

$$=1.239e\text{-}16*x4+(-1.221e\text{-}12)*x3+4.877e\text{-}09*x2+(-9.499e\text{-}06)*x+0.01153$$

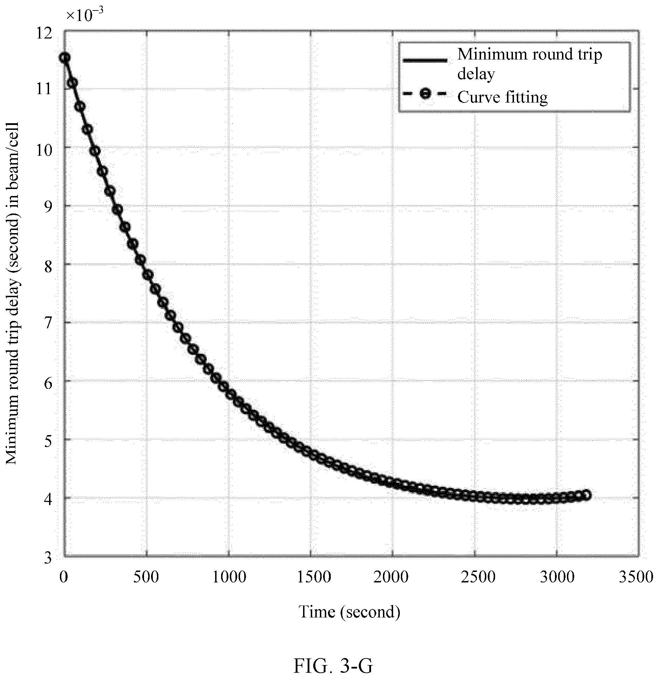

FIG. 3-G shows comparison between a curve of the function and a change of an actual minimum round trip delay in a beam. It can be learned that the fitting function curve can well reflect the change of the minimum round trip delay in the beam over time. The UE may update the common TA change in real time based on the curve. This embodiment is also applicable to showing a change of the delay of the feeder link over time in the steerable mode and the non-steerable mode. Coefficients of a function may be sent to the UE to inform the UE of the change of the delay of the feeder link.

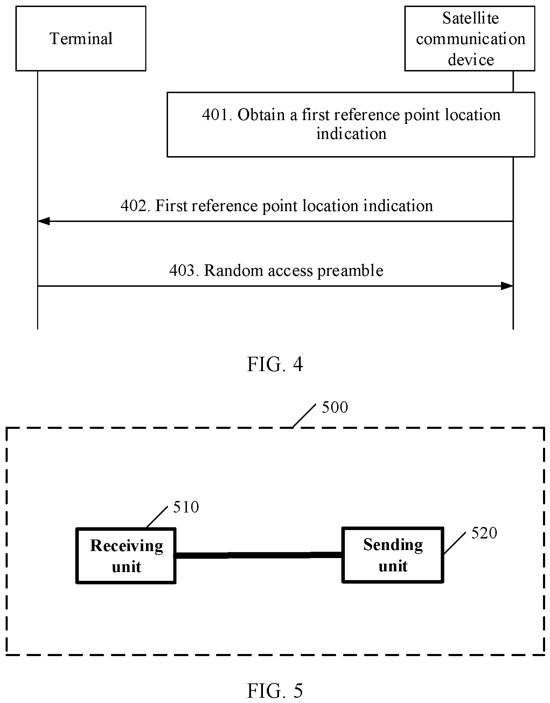

FIG. 4 is a schematic flowchart of an example satellite communication method according to an embodiment of this application. The satellite communication method may include the following steps:

401. A satellite communication device obtains a first reference point location indication, and sends the first reference point location indication. The first reference point location indication is used to obtain a common TA through calculation in conjunction with a real-time location of a satellite, and the common TA is used by a terminal to send a random access preamble.

402. The terminal receives the first reference point location indication, and obtains the common TA through calculation based on the real-time location of the satellite and the first reference point location indication.

403. Send a random access preamble by using the common TA.

The receiving the first reference point location indication includes: receiving a message carrying M reference point location indications. The M reference point location indications include the first reference point location indication, a first reference point indicated by the first reference point location indication is a reference point closest to the terminal in M reference points, and M is a positive integer.

In the foregoing scenario, a satellite base station broadcasts location information of a reference point in a beam or a cell covered by the satellite base station. UE can calculate a real-time common TA value based on the location information of the reference point and a real-time location of the satellite (the satellite location may be from ephemeris information).

Values of TA_full and TA compensated may be obtained through calculation by the UE based on the location information of the reference point and the ephemeris information.

When the satellite base station broadcasts location information of a plurality of reference points in one beam or cell, at the same time, the satellite base station broadcasts a determining threshold corresponding to these common timing advances, such as a Doppler (Doppler) threshold, a Doppler change rate threshold, or a plurality of location interval thresholds. The UE determines, based on a Doppler shift value, a Doppler change rate value, or rough positioning information obtained by detecting a downlink signal, location information of a reference point that should be used by the UE, and then calculates a corresponding value of TA_full or TA compensated.

As described above, a common TA parameter and a common TA change amount calculation parameter may be sent in an RRC connection stage. In subsequent communication between the terminal and the network side, as a position relationship between the network side device (for example, the satellite communication device) and the terminal changes, the common TA parameter and the common TA change amount calculation parameter may change.

Therefore, the network side needs to send an updated common TA parameter and/or common TA change amount calculation parameter to the terminal.

In a possible implementation, the network side directly sends the updated common TA parameter and/or common TA change amount calculation parameter to the terminal. Optionally, the network side may send the updated common TA parameter and common TA change amount calculation parameter to the terminal separately, that is, at different time. Alternatively, the network side may send the updated common TA parameter and common TA change amount calculation parameter to the terminal at the same time.

In a possible implementation, the network side sends an update difference of the common TA parameter and/or the common TA change amount calculation parameter to the terminal. After the terminal receives the update difference, the updated common TA parameter and/or common TA change amount calculation parameter is obtained by adding/subtracting the update difference to/from a common TA parameter and/or a common TA change amount calculation parameter that is previously used or sent by the network side to the terminal last time. For example, a common TA and a common TA change rate are used as an example. The network side sends a common TA update difference and/or a common TA change rate update difference to the terminal. After receiving the update difference, the terminal adds the update difference to a common TA value and/or a common TA change rate value currently used (or sent by the network side to the terminal last time) to obtain an updated common TA value and/or common TA change rate value. That is, Updated common TA value = Used common TA value + Common TA update difference, and Updated common TA change rate = Used common TA change rate + Common TA change rate update difference. This implementation method can reduce signaling overheads.

The updated common TA parameter and/or common TA change amount calculation parameter (or the update difference of the common TA parameter and/or the common TA change amount calculation parameter) may be transmitted in the foregoing broadcast signaling, multicast signaling, or unicast signaling, for example, at least one of broadcast information including a system information block SIB1, other system information OSI, and a main system information block MIB, which may be sent by the network device to the terminal through broadcast or multicast. In addition, in the radio resource control RRC connection stage, the network device may add the information to at least one of RRC signaling (for example, an RRC setup (RRCsetup) message, RRC reconfiguration signaling (RRCReconfiguration), or RRC resume signaling (RRCResume)), downlink control information DCI, group DCI, a media access control control element MAC CE, and a timing advance command TAC, or the information is transmitted together with data, or sent to the UE through broadcast or multicast in a PDSCH bearer that is separately allocated.

In a possible implementation, the network side adds a new variable field, for example, TA-rate, to a generic random access configuration (RACH-ConfigGeneric) parameter, to indicate the common TA change rate. The RACH-ConfigGeneric parameter is sent to the terminal in a broadcast message or an RRC message, to provide the terminal with a generic parameter used in a random access process and subsequent communication. It should be noted that, the variable field such as TA-rate, a TA-rate update value, or a TA-rate update difference may alternatively be added to other broadcast or multicast signaling with similar functions, to implement a function and an effect of sending/updating the common TA change rate. An example is as follows:

```
RACH-ConfigGeneric ::= SEQUENCE {
prach-ConfigurationIndex INTEGER (0..255),
TA-rate INTEGER (-127.. 127),
```

}Optionally, the network side may determine a representation range of TA-rate based on a maximum change rate of a round trip delay (or one-way delay) between the location (including an orbit altitude range, a communication elevation angle range, and the like) of the satellite and a reference point. TA-rate may be a positive value, a negative value, or zero. For example, if an orbit altitude of the satellite is 600 km, TA-rate uses 0.315 us as a dimension unit, the representation range of TA-rate is -127 to 127, and 8-bit signaling is required for representation.

It may be understood that, if different common TA change rate ranges and time dimension units are assumed, TA-rate may have different representation ranges. For example, after the terminal receives TA-rate, an updated common TA value obtained by using a TA-rate value is added to or subtracted from a service link TA value (for example, a round trip delay of a service link) obtained through calculation by the terminal, to finally obtain a timing advance TA value used by the terminal. For example, TA = TA cal -/+ (common TA + TA-rate*(t2-t1)*time dimension unit). t1 and t2 may be a time at which the network side sends a common TA and a time at which the UE sends uplink data by using the TA value.

Optionally, the RACH-ConfigGeneric parameter (including the common timing advance change rate TA-rate) may be transmitted in a message such as a SIB1, RRC setup signaling (RRCSetup), RRC reconfiguration signaling (RRCReconfiguration), or RRC resume signaling (RRCResume), which can ensure that the UE can receive the common TA change rate value in an initial access phase and during switching in a connected state, to implement accurate uplink time synchronization.

In a possible implementation, a new variable field TA-rate-update is defined in MAC CE signaling to represent a common TA change rate value, a common TA change rate value update value, or a common TA change rate value update difference. For example, referring to the method for determining a representation range of TA-rate, a range of -127 to 127 may be represented in the variable field TA-rate-update by using eight bits. Compared with broadcast signaling, MAC CE signaling may be used to send a common TA change rate related value to each terminal or a group of terminals, which may be more flexibly indicated to terminals. Different terminals or different groups of terminals can use different common TA change rate values or update values.

Some examples of devices are further provided below.

Referring to FIG. 5, an embodiment of this application provides a terminal 500, including:

a receiving unit 510, configured to receive a first common timing advance common TA parameter and a first common TA change amount calculation parameter, where the first common TA parameter is used to obtain a first common TA, and the first common TA change amount calculation parameter is used to update the first common TA to obtain an updated common TA; and

a sending unit 520, configured to send a random access preamble by using the updated common TA.

The modules in the terminal 500 may be configured to cooperate to implement some or all steps of any method performed by the terminal in the embodiment shown in FIG. 2.

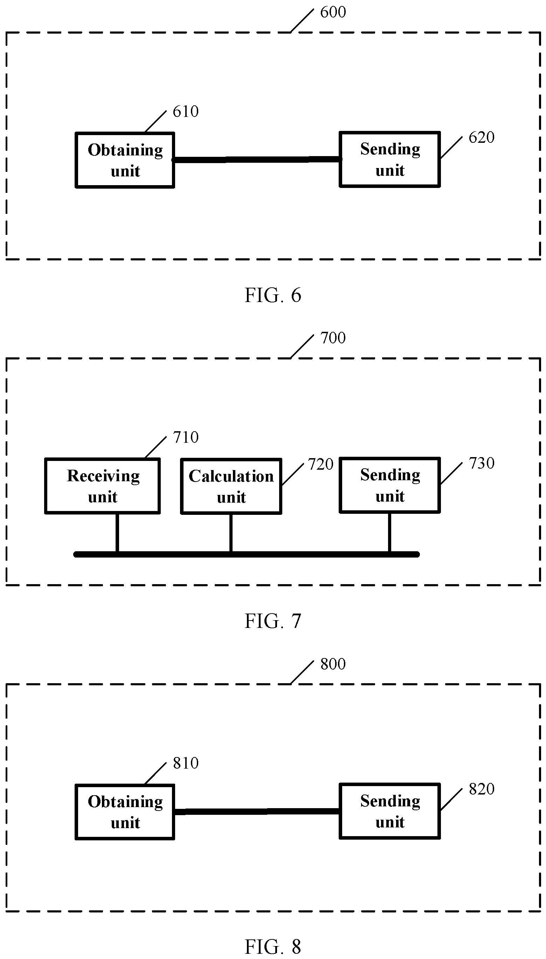

Referring to FIG. 6, an embodiment of this application provides a satellite communication device 600, which may include:

an obtaining unit, configured to obtain a first common timing advance common TA parameter and a first common TA change amount calculation parameter; and

a sending unit, configured to send the first common timing advance common TA parameter and the first common TA change amount calculation parameter. The first common TA parameter is used to obtain a first common TA, the first common TA change amount calculation parameter is used to update the first common TA to obtain an updated common TA, and the updated common TA is used by a terminal to send a random access preamble.

The modules in the satellite communication device 600 may be configured to cooperate to implement some or all steps of any method performed by the terminal in the embodiment shown in FIG. 2.

Referring to FIG. 7, an embodiment of this application provides a terminal 700, which may include:

a receiving unit 710, configured to receive a first reference point location indication;

a calculation unit 720, configured to obtain a common TA through calculation based on a real-time location of a satellite and the first reference point location indication; and

a sending unit 730, configured to send a random access preamble by using the common TA.

In a possible implementation, the receiving a first reference point location indication includes: receiving a message carrying M reference point location indications. The M reference point location indications include the first reference point location indication, and a first reference point indicated by the first reference point location indication is a reference point closest to the terminal in M reference points.

The modules in the terminal 700 may be configured to cooperate to implement some or all steps of any method performed by the terminal in the embodiment shown in FIG. 4.

In a possible implementation, the modules in the terminal 700 may be configured to cooperate to implement some or all steps of any method performed by the terminal in the embodiment shown in FIG. 2.

In this case, the receiving unit 710 is configured to receive a first common timing advance common TA parameter and a first common TA change amount calculation parameter. The first common TA parameter is used to obtain a first common TA, and the first common TA change amount calculation parameter is used to update the first common TA to obtain an updated common TA.

The calculation unit 720 is configured to update the first common TA based on the first common TA change amount calculation parameter, to obtain the updated common TA.

The sending unit 730 is configured to send a random access preamble by using the updated common TA.

Referring to FIG. 8, an embodiment of this application provides a satellite communication device 800, including:

an obtaining unit 810, configured to obtain a first reference point location indication; and

a sending unit 820, configured to send the first reference point location indication. The first reference point location indication is used to obtain a common TA through calculation in conjunction with a real-time location of a satellite, and the common TA is used by a terminal to send a random access preamble.

The modules in the terminal 800 may be configured to cooperate to implement some or all steps of any method performed by the terminal in the embodiment shown in FIG. 4.

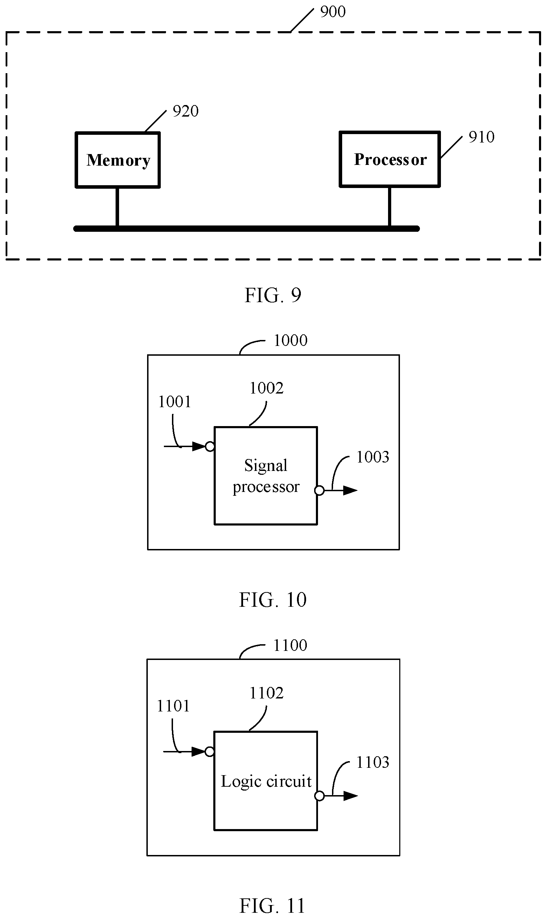

Referring to FIG. 9, an embodiment of this application further provides a satellite communication device 900 (the satellite communication device 900 is, for example, a terminal device, a ground base station, or a satellite), and may include a processor 910 and a memory 920 that are coupled to each other. The processor is configured to invoke a computer program stored in the memory, to perform some or all steps of any method provided in the embodiments of this application.

An embodiment of this application further provides a computer-readable storage medium. The computer-readable storage medium stores a computer program, and the computer program is executed by a processor to complete some or all steps of any method provided in the embodiments of this application.

An embodiment of this application further provides a computer program product including instructions. When the computer program product runs on user equipment, a satellite communication device may be enabled to perform some or all steps of any method provided in the embodiments of this application.

Referring to FIG. 10, an embodiment of this application further provides a communication apparatus 1000, including an input interface circuit 1001, a logic circuit 1002, and an output interface circuit 103. The logic circuit is configured to perform some or all steps of any method provided in the embodiments of this application.

Referring to FIG. 11, an embodiment of this application further provides a communication apparatus 1100, including at least one input end 1101, a signal processor 1101, and at least one output end 1103. The signal processor 1102 is configured to perform some or all steps of any method provided in the embodiments of this application.

An embodiment of this application further provides a computer-readable storage medium. The computer-readable storage medium stores a computer program, and the computer program is executed by hardware (for example, a processor), to perform some or all steps of any method that is performed by any device and that is in embodiments of this application.

An embodiment of this application further provides a computer program product including instructions. When the computer program product is run on a computer device, the computer device is enabled to perform some or all steps of any method in the foregoing aspects.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, an optical disc), a semiconductor medium (for example, a solid-state drive), or the like. In the foregoing embodiments, description of the embodiments has respective focuses. For a part that is not described in detail in an embodiment, refer to related descriptions in other embodiments.

In the foregoing embodiments, description of the embodiments has respective focuses. For a part that is not described in detail in an embodiment, refer to related descriptions in other embodiments.

In the several embodiments provided in this application, it should be understood that the disclosed apparatus may be implemented in another manner. For example, the described apparatus embodiments are merely examples. For example, the unit division is merely logical function division or may be other division during actual implementation. For example, a plurality of units or components may be combined or integrated into another system, or some features may be ignored or not performed. In addition, the displayed or discussed mutual indirect couplings or direct couplings or communication connections may be implemented through some interfaces. The indirect couplings or communication connections between the apparatuses or units may be implemented in an electronic form or another form.

The units described as separate parts may or may not be physically separate. Parts displayed as units may or may not be physical units, and may be located at one position or may be distributed on a plurality of network units. Some or all units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some steps of the methods described in embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

**Claims**

1.  A satellite communication method, comprising:

    receiving a first common timing advance common TA parameter and a first common TA change amount calculation parameter, wherein the first common TA parameter is used to obtain a first common TA, and the first common TA change amount calculation parameter is used to update the first common TA to obtain an updated common TA; and
    sending a random access preamble by using the updated common TA.

2.  The method according to claim 1, wherein the receiving a first common timing advance common TA parameter and a first common TA change amount calculation parameter comprises:

    receiving a message carrying N groups of common TA parameters and N groups of common TA change amount calculation parameters, wherein the N groups of common TA parameters and the N groups of common TA change amount calculation parameters are in a one-to-one correspondence, wherein
    N is a positive integer;
    the first common TA parameter is one of the N groups of common TA parameters, and each group of common TA parameters comprises one or more common TA parameters; and
    the first common TA change amount calculation parameter is a common TA change amount calculation parameter corresponding to the first common TA parameter, and each group of common TA change amount calculation parameters comprises one or more common TA change amount calculation parameters.

3.  The method according to claim 2, wherein the first common TA parameter is one of the N groups of common TA parameters that meets a Doppler threshold determining condition, a Doppler change rate threshold determining condition, or a location interval threshold determining condition.

4.  The method according to any one of claims 1 to 3, wherein

$$TA\_full = TA\_common + (t2-t1)*KTA,$$

    wherein TA_full represents the updated common TA, TA common represents the first common TA, the first common TA change amount calculation parameter comprises KTA, KTA represents a change rate of the common timing advance over time, t1 represents a sending time of the first common timing advance common TA parameter, and t2 represents a sending time of the random access preamble.

5.  The method according to claim 4, wherein the method further comprises:
    receiving a timestamp, wherein the timestamp is used to indicate the sending time t1 of the first common timing advance common TA parameter.

6.  The method according to claim 1 or 4, wherein the receiving a first common timing advance common TA parameter and a first common TA change amount calculation parameter specifically comprises:

    receiving the first common TA change amount calculation parameter by using a system information block SIB or remaining minimum system information RMSI, wherein
    the sending time t1 of the first common timing advance common TA parameter is determined by a start frame of a modification period of the system information block SIB.

7.  The method according to any one of claims 1 to 3, wherein

$$TA\_full = TA\_common + \Delta TA\_initial + \Delta TA\_diff,$$

    wherein TA_full represents the updated common TA, TA common represents the first common TA, the first common TA change amount calculation parameter comprises $\Delta TA\_initial$ and $\Delta TA\_diff$, $\Delta TA\_initial$ represents an initial common timing difference, $\Delta TA\_diff$ represents a timing advance change amount of t2 relative to $\Delta TA\_initial$, and t2 represents a sending time of the random access preamble.

8. The method according to any one of claims 1 to 3, wherein

$$TA\_full = TA\_common + \Delta TA1,$$

wherein TA_full represents the updated common TA, TA common represents the first common TA, the first common TA change amount calculation parameter comprises $\Delta TA1$, the first common TA change amount calculation parameter comprises common TA change amount calculation parameters respectively corresponding to a plurality of times, $\Delta TA1$ represents a common TA change amount calculation parameter that is comprised in the first common TA change amount calculation parameter and that corresponds to t2, and t2 represents a sending time of the random access preamble.

9. A satellite communication method, comprising:

obtaining a first common timing advance common TA parameter and a first common TA change amount calculation parameter; and
sending the first common timing advance common TA parameter and the first common TA change amount calculation parameter, wherein the first common TA parameter is used to obtain a first common TA, the first common TA change amount calculation parameter is used to update the first common TA to obtain an updated common TA, and the updated common TA is used by a terminal to send a random access preamble.

10. The method according to claim 9, wherein the sending the first common timing advance common TA parameter and the first common TA change amount calculation parameter comprises:

sending a message carrying N groups of common TA parameters and N groups of common TA change amount calculation parameters, wherein the N groups of common TA parameters and the N groups of common TA change amount calculation parameters are in a one-to-one correspondence, wherein N is a positive integer;
the first common TA parameter is one of the N groups of common TA parameters, and each group of common TA parameters comprises one or more common TA parameters; and
the first common TA change amount calculation parameter is a common TA change amount calculation parameter corresponding to the first common TA parameter, and each group of common TA change amount calculation parameters comprises one or more common TA change amount calculation parameters.

11. The method according to claim 10, wherein
the first common TA parameter is one of the N groups of common TA parameters that meets a Doppler threshold determining condition, a Doppler change rate threshold determining condition, or a location interval threshold determining condition.

12. A satellite communication method, comprising:

receiving a first reference point location indication;
obtaining a common TA through calculation based on a real-time location of a satellite and the first reference point location indication; and
sending a random access preamble by using the common TA.

13. The method according to claim 12, wherein
the receiving a first reference point location indication comprises: receiving a message carrying M reference point location indications, wherein the M reference point location indications comprise the first reference point location indication, and a first reference point indicated by the first reference point location indication is a reference point closest to a terminal in M reference points.

14. A satellite communication method, comprising:

obtaining a first reference point location indication; and
sending the first reference point location indication, wherein the first reference point location indication is used to obtain a common TA through calculation in conjunction with a real-time location of a satellite, and the common TA is used by a terminal to send a random access preamble.

**15.** The method according to claim 14, wherein
the sending the first reference point location indication comprises: sending a message carrying M reference point location indications, wherein the M reference point location indications comprise the first reference point location indication, and a first reference point indicated by the first reference point location indication is a reference point closest to the terminal in M reference points.

**16.** A satellite communication method, comprising:

receiving, by a terminal, a second common timing advance common TA parameter and a second common TA change rate calculation parameter, wherein the second common TA parameter is used to obtain a second common TA, and the second common TA change amount calculation parameter is used to update the second common TA to obtain an updated second common TA; and
sending an uplink signal based on the updated second common TA.

**17.** The method according to claim 16, wherein the receiving a second common timing advance common TA parameter and a second common TA change amount calculation parameter comprises:

receiving a message carrying N groups of common TA parameters and N groups of common TA change amount calculation parameters, wherein the N groups of common TA parameters and the N groups of common TA change amount calculation parameters are in a one-to-one correspondence, wherein
N is a positive integer;
the second common TA parameter is one of the N groups of common TA parameters, and each group of common TA parameters comprises one or more common TA parameters; and
the second common TA change amount calculation parameter is a common TA change amount calculation parameter corresponding to the second common TA parameter, and each group of common TA change amount calculation parameters comprises one or more common TA change amount calculation parameters.

**18.** The method according to claim 17, wherein
the second common TA parameter is one of the N groups of common TA parameters that meets a Doppler threshold determining condition, a Doppler change rate threshold determining condition, or a location interval threshold determining condition.

**19.** The method according to any one of claims 16 to 18, wherein the sending an uplink signal based on the updated second common TA comprises:

obtaining a first timing advance based on location information of the terminal and ephemeris information of a satellite;
obtaining a second timing advance based on the updated second common TA and the first timing advance; and
sending the uplink signal by using the second timing advance.

**20.** The method according to claim 19, wherein

$$TA\_speci = TA\_cal - (TA\_common + (t2-t1)*KTA),$$

wherein TA_speci represents the second timing advance, TA_cal represents the first timing advance, TA_common represents the second common TA, the second common TA change amount calculation parameter comprises KTA, KTA represents a change rate of the common timing advance over time, t1 represents a sending time of the second common timing advance common TA parameter, and t2 represents a sending time of the uplink signal.

**21.** The method according to claim 19, wherein

$$TA\_speci = TA\_cal - (TA\_common + \Delta TA\_initial + \Delta TA\_diff),$$

wherein TA speci represents the second timing advance, TA_cal represents the first timing advance, TA _common represents the second common TA, the second common TA change amount calculation parameter comprises $\Delta TA\_initial$ and $\Delta TA\_diff$, $\Delta TA\_initial$ represents an initial common timing difference, $\Delta TA\_diff$ represents a timing advance change amount of t2 relative to $\Delta TA\_initial$, and t2 represents a sending time of the uplink signal.

22. The method according to claim 19, wherein

$$TA\_speci = TA\_cal - (TA\_common + \Delta TA1),$$

wherein TA speci represents the second timing advance, TA_cal represents the first timing advance, TA_common represents the second common TA, the second common TA change amount calculation parameter comprises common TA change amount calculation parameters respectively corresponding to a plurality of times, $\Delta TA1$ represents a common TA change amount calculation parameter that is comprised in the second common TA change amount calculation parameter and that corresponds to t2, and t2 represents a sending time of the uplink signal.

23. The method according to any one of claims 16 to 22, wherein the receiving a second common timing advance common TA parameter and a second common TA change rate calculation parameter comprises:

receiving update differences of the second common timing advance common TA parameter and the second common TA change rate calculation parameter; and
obtaining a new common timing advance common TA parameter and second common TA change rate calculation parameter based on the update difference.

24. A satellite communication method, comprising:

obtaining a second common timing advance common TA parameter and a second common TA change amount calculation parameter; and
sending the second common timing advance common TA parameter and the second common TA change amount calculation parameter, wherein the second common TA parameter is used to obtain a second common TA, the second common TA change amount calculation parameter is used to update the second common TA to obtain an updated second common TA, and the updated second common TA is used by a terminal to send an uplink signal.

25. The method according to claim 23, wherein the sending the second common timing advance common TA parameter and the second common TA change amount calculation parameter comprises:

sending a message carrying N groups of common TA parameters and N groups of common TA change amount calculation parameters, wherein the N groups of common TA parameters and the N groups of common TA change amount calculation parameters are in a one-to-one correspondence, wherein
N is a positive integer;
the second common TA parameter is one of the N groups of common TA parameters, and each group of common TA parameters comprises one or more common TA parameters; and
the second common TA change amount calculation parameter is a common TA change amount calculation parameter corresponding to the second common TA parameter, and each group of common TA change amount calculation parameters comprises one or more common TA change amount calculation parameters.

26. A terminal, comprising:

a receiving unit, configured to receive a first common timing advance common TA parameter and a first common TA change amount calculation parameter, wherein the first common TA parameter is used to obtain a first common TA, and the first common TA change amount calculation parameter is used to update the first common TA to obtain an updated common TA; and
a sending unit, configured to send a random access preamble by using the updated common TA.

27. The terminal according to claim 26, wherein the receiving unit being configured to receive a first common timing advance common TA parameter and a first common TA change amount calculation parameter comprises:

the receiving unit is specifically configured to receive a message carrying N groups of common TA parameters and N groups of common TA change amount calculation parameters, wherein the N groups of common TA parameters and the N groups of common TA change amount calculation parameters are in a one-to-one correspondence, wherein
N is a positive integer;
the first common TA parameter is one of the N groups of common TA parameters, and each group of common TA parameters comprises one or more common TA parameters; and
the first common TA change amount calculation parameter is a common TA change amount calculation parameter corresponding to the first common TA parameter, and each group of common TA change amount calculation parameters comprises one or more common TA change amount calculation parameters.

28. The terminal according to claim 27, wherein the first common TA parameter is one of the N groups of common TA parameters that meets a Doppler threshold determining condition, a Doppler change rate threshold determining condition, or a location interval threshold determining condition.

29. The terminal according to any one of claims 26 to 28, wherein

$$TA\_full = TA\_common + (t2-t1)*KTA,$$

wherein TA_full represents the updated common TA, TA common represents the first common TA, the first common TA change amount calculation parameter comprises KTA, KTA represents a change rate of the common timing advance over time, t1 represents a sending time of the first common timing advance common TA parameter, and t2 represents a sending time of the random access preamble.

30. The terminal according to claim 29, wherein
the receiving unit is further configured to receive a timestamp, wherein the timestamp is used to indicate the sending time t1 of the first common timing advance common TA parameter.

31. The terminal according to any one of claims 21 to 30, wherein the receiving unit being configured to receive a first common timing advance common TA parameter and a first common TA change amount calculation parameter specifically comprises:

the receiving unit is specifically configured to receive the first common TA change amount calculation parameter by using a system information block SIB, wherein
the sending time t1 of the first common timing advance common TA parameter is determined by a start frame of a modification period of the system information block SIB.

32. The terminal according to any one of claims 26 to 28, wherein

$$TA\_full = TA\_common + \Delta TA\_initial + \Delta TA\_diff,$$

wherein TA_full represents the updated common TA, TA common represents the first common TA, the first common TA change amount calculation parameter comprises $\Delta TA\_initial$ and $\Delta TA\_diff$, $\Delta TA\_initial$ represents an initial common timing difference, $\Delta TA\_diff$ represents a timing advance change amount of t2 relative to $\Delta TA\_initial$, and t2 represents a sending time of the random access preamble.

33. The method according to any one of claims 26 to 28, wherein

$$TA\_full = TA\_common + \Delta TA1,$$

wherein TA_full represents the updated common TA, TA common represents the first common TA, the first common TA change amount calculation parameter comprises $\Delta TA1$, the first common TA change amount calculation parameter comprises common TA change amount calculation parameters respectively corresponding to a plurality of times, $\Delta TA1$ represents a common TA change amount calculation parameter that is comprised in the first common TA change amount calculation parameter and that corresponds to t2, and t2 represents a sending time of the random access preamble.

34. A satellite communication device, comprising:

an obtaining unit, configured to obtain a first common timing advance common TA parameter and a first common TA change amount calculation parameter; and

a sending unit, configured to send the first common timing advance common TA parameter and the first common TA change amount calculation parameter, wherein the first common TA parameter is used to obtain a first common TA, the first common TA change amount calculation parameter is used to update the first common TA to obtain an updated common TA, and the updated common TA is used by a terminal to send a random access preamble.

35. The device according to claim 34, wherein the sending unit being configured to send the first common timing advance common TA parameter and the first common TA change amount calculation parameter comprises:

the sending unit is specifically configured to send a message carrying N groups of common TA parameters and N groups of common TA change amount calculation parameters, wherein the N groups of common TA parameters and the N groups of common TA change amount calculation parameters are in a one-to-one correspondence, wherein

N is a positive integer;

the first common TA parameter is one of the N groups of common TA parameters, and each group of common TA parameters comprises one or more common TA parameters; and

the first common TA change amount calculation parameter is a common TA change amount calculation parameter corresponding to the first common TA parameter, and each group of common TA change amount calculation parameters comprises one or more common TA change amount calculation parameters.

36. The device according to claim 35, wherein

the first common TA parameter is, for example, one of the N groups of common TA parameters that meets a Doppler threshold determining condition, a Doppler change rate threshold determining condition, or a location interval threshold determining condition.

37. A terminal, comprising:

a receiving unit, configured to receive a first reference point location indication;

a calculation unit, configured to obtain a common TA through calculation based on a real-time location of a satellite and the first reference point location indication; and

a sending unit, configured to send a random access preamble by using the common TA.

38. The terminal according to claim 37, wherein the receiving unit being configured to receive a first reference point location indication comprises:

the receiving unit is configured to receive a message carrying M reference point location indications, wherein the M reference point location indications comprise the first reference point location indication, and a first reference point indicated by the first reference point location indication is a reference point closest to the terminal in M reference points.

39. A satellite communication device, comprising:

an obtaining unit, configured to obtain a first reference point location indication; and

a sending unit, configured to send the first reference point location indication, wherein the first reference point location indication is used to obtain a common TA through calculation in conjunction with a real-time location of a satellite, and the common TA is used by a terminal to send a random access preamble.

40. The device according to claim 39, wherein the sending unit being configured to send the first reference point location indication comprises:

the sending unit is specifically configured to send a message carrying M reference point location indications, wherein the M reference point location indications comprise the first reference point location indication, and a first reference point indicated by the first reference point location indication is a reference point closest to the terminal in M reference points.

41. A terminal, comprising:

a receiving unit, configured to receive a second common timing advance common TA parameter and a second common TA change rate calculation parameter, wherein the second common TA parameter is used to obtain a second common TA, and the second common TA change amount calculation parameter is used to update the second common TA to obtain an updated second common TA; and

a sending unit, configured to send an uplink signal based on the updated second common TA.

42. The terminal according to claim 41, wherein

the receiving unit is specifically configured to receive a message carrying N groups of common TA parameters and N groups of common TA change amount calculation parameters, wherein the N groups of common TA parameters and the N groups of common TA change amount calculation parameters are in a one-to-one correspondence, wherein

N is a positive integer;

the second common TA parameter is one of the N groups of common TA parameters, and each group of common TA parameters comprises one or more common TA parameters; and

the second common TA change amount calculation parameter is a common TA change amount calculation parameter corresponding to the second common TA parameter, and each group of common TA change amount calculation parameters comprises one or more common TA change amount calculation parameters.

43. The terminal according to claim 41 or 42, wherein

the terminal further comprises a processing unit, configured to obtain a first timing advance based on location information of the terminal and ephemeris information of a satellite; and

obtain a second timing advance based on the updated second common TA and the first timing advance; and the sending unit is specifically configured to send the uplink signal by using the second timing advance.

44. The terminal according to claim 43, wherein

$$TA\_speci = TA\_cal - (TA\_common + (t2-t1)*KTA),$$

wherein TA_speci represents the second timing advance, TA_cal represents the first timing advance, TA_common represents the second common TA, the second common TA change amount calculation parameter comprises KTA, KTA represents a change rate of the common timing advance over time, t1 represents a sending time of the second common timing advance common TA parameter, and t2 represents a sending time of the uplink signal.

45. The terminal according to claim 43, wherein

$$TA\_speci = TA\_cal - (TA\_common + \Delta TA\_initial + \Delta TA\_diff),$$

wherein TA speci represents the second timing advance, TA_cal represents the first timing advance, TA_common represents the second common TA, the second common TA change amount calculation parameter comprises $\Delta TA\_initial$ and $\Delta TA\_diff$, $\Delta TA\_initial$ represents an initial common timing difference, $\Delta TA\_diff$ represents a timing advance change amount of t2 relative to $\Delta TA\_initial$, and t2 represents a sending time of the uplink signal.

46. The terminal according to claim 43, wherein

$$TA\_speci = TA\_cal - (TA\_common + \Delta TA1),$$

wherein TA speci represents the second timing advance, TA_cal represents the first timing advance, TA_common represents the second common TA, the second common TA change amount calculation parameter comprises common TA change amount calculation parameters respectively corresponding to a plurality of times, $\Delta TA1$ represents a common TA change amount calculation parameter that is comprised in the second common TA change amount calculation parameter and that corresponds to t2, and t2 represents a sending time of the uplink signal.

47. A satellite communication device, comprising:

an obtaining unit, configured to obtain a second common timing advance common TA parameter and a second common TA change amount calculation parameter; and

a sending unit, is configured to send the second common timing advance common TA parameter and the second common TA change amount calculation parameter, wherein the second common TA parameter is used to obtain a second common TA, the second common TA change amount calculation parameter is used to update the second common TA to obtain an updated second common TA, and the updated second common TA is used by a terminal to send an uplink signal

48. The device according to claim 47, wherein

the sending unit is specifically configured to send a message carrying N groups of common TA parameters and N groups of common TA change amount calculation parameters, wherein the N groups of common TA parameters and the N groups of common TA change amount calculation parameters are in a one-to-one correspondence, wherein

N is a positive integer;

the second common TA parameter is one of the N groups of common TA parameters, and each group of common TA parameters comprises one or more common TA parameters; and

the second common TA change amount calculation parameter is a common TA change amount calculation parameter corresponding to the second common TA parameter, and each group of common TA change amount calculation parameters comprises one or more common TA change amount calculation parameters.

49. A terminal, comprising:

a processor, coupled to a memory, wherein

the processor is configured to invoke a computer program stored in the memory, to perform the method according to any one of claims 1 to 8, claims 12 to 13, or claims 16 to 23.

50. A satellite communication device, comprising:

a processor, coupled to a memory, wherein

the processor is configured to invoke a computer program stored in the memory, to perform the method according to any one of claims 9 to 11, claims 14 to 15, or claims 24 to 25.

51. A computer-readable storage medium, wherein

the computer-readable storage medium stores a computer program, and the computer program is executed by a processor to:

perform the method according to any one of claims 1 to 8;
perform the method according to any one of claims 9 to 11;
perform the method according to claim 12 or 13;
perform the method according to claim 14 or 15;
perform the method according to any one of claims 16 to 23; or
perform the method according to claim 24 or 25.

52. A communication apparatus, comprising:

at least one input end, a signal processor, and at least one output end, wherein

the signal processor is configured to perform the method according to any one of claims 1 to 25.

53. A communication apparatus, comprising: an input interface circuit, a logic circuit, and an output interface circuit, wherein

the input interface is configured to receive a first common timing advance common TA parameter and a first common TA change amount calculation parameter;

the logic circuit is configured to perform the method according to any one of claims 1 to 8 to obtain an updated common TA; and

the output interface is configured to output a random access preamble by using the updated common TA.

**54.** A communication apparatus, comprising: a logic circuit and an output interface circuit, wherein

the logic circuit is configured to perform the method according to any one of claims 9 to 11 to obtain a first common timing advance common TA parameter and a first common TA change amount calculation parameter; and
the output interface is configured to output the first common timing advance common TA parameter and the first common TA change amount calculation parameter.

**55.** A communication apparatus, comprising: an input interface circuit, a logic circuit, and an output interface circuit, wherein

the input interface circuit is configured to receive a first reference point location indication;
the logic circuit is configured to perform the method according to claim 12 or 13 to obtain a common TA; and
the output interface is configured to output a random access preamble by using the common TA.

**56.** A communication apparatus, comprising: a logic circuit and an output interface circuit, wherein

the logic circuit is configured to perform the method according to claim 14 or 15 to obtain a first reference point location indication; and
the output interface is configured to output the first reference point location indication.

**57.** A communication apparatus, comprising: an input interface circuit, a logic circuit, and an output interface circuit, wherein

the input interface circuit is configured to receive a second common timing advance common TA parameter and a second common TA change rate calculation parameter;
the logic circuit is configured to perform the method according to any one of claims 16 to 23 to obtain an updated second common TA; and
the output interface is configured to send an uplink signal based on the updated second common TA.

**58.** A communication apparatus, comprising: a logic circuit and an output interface circuit, wherein

the logic circuit is configured to perform the method according to claim 24 or 25 to obtain a second common timing advance common TA parameter and a second common TA change amount calculation parameter; and
the output interface is configured to output the second common timing advance common TA parameter and the second common TA change amount calculation parameter.

**59.** A computer program product, running on a computer to:

perform the method according to any one of claims 1 to 8;
perform the method according to any one of claims 9 to 11;
perform the method according to claim 12 or 13;
perform the method according to claim 14 or 15;
perform the method according to any one of claims 16 to 21; or
perform the method according to claim 22 or 23.

**60.** A communication system, comprising the terminal according to any one of claims 16 to 23, and/or the satellite communication device according to any one of claims 24 to 26.

**61.** A communication system, comprising the terminal according to claim 27 or 28 and/or the satellite communication device according to claim 29 or 30.

**62.** A communication system, comprising the terminal according to claim 39 or 44 and/or the satellite communication device according to claim 45 or 46.

FIG. 1-A

Satellite

Beam/Cell

FIG. 1-B

Satellite

Moving
direction

FIG. 1-C

FIG. 1-D

FIG. 1-E

Downlink data

| Frame 1 | Frame 2 | Frame 3 |
|---------|---------|---------|

Uplink data received by the satellite at the location 1

| Frame 1 | Frame 2 | Frame 3 |
|---------|---------|---------|

Uplink data received by the satellite at the location 2

| Frame 1 | Frame 2 | Frame 3 |
|---------|---------|---------|

FIG. 1-F

4

3

2

5

1

6

7

Satellite

8  Beam/Cell   9
   diameter

## FIG. 1-G

Satellite

Service link

Feeder link

Ground
station

Reference
point

Beam or cell

## FIG. 1-H

Terminal

Satellite communication device

201. Obtain a first common TA parameter and a first common TA change amount calculation parameter

202. First common TA parameter and first common TA change amount calculation parameter

203. Random access preamble

FIG. 2

UE uses common TA + ΔTA2

UE uses common TA + ΔTA1

UE uses common TA + ΔTA3

Broadcast common
TA, ΔTA1, ΔTA2...

R01          R02          R03

| Frame 1 | Frame 2 | Frame 3 | Frame 4 |

FIG. 3-A

FIG. 3-B

Broadcast common
TA, $\Delta TA1$, $\Delta TA2$...

Network side compensates
for common TA + $\Delta TA1$

R01

Network side compensates
for common TA + $\Delta TA2$

R02

Network side compensates
for common TA + $\Delta TA3$

R03

Frame 1 | Frame 2 | Frame 3 | Frame 4

FIG. 3-C

Network side compensates for
common TA + ΔTA1_initial + ΔTA_diff

Network side compensates for
common TA + ΔTA1_initial

Broadcast common TA,
ΔTA1_initial, and
ΔTA_diff

Network side compensates for
common TA + ΔTA1_initial + 2*ΔTA_diff

R01    R02    R03

| Frame 1 | Frame 2 | Frame 3 | Frame 4 |

FIG. 3-D

| Interval in which a Doppler value (DV) is located | Group number | Common timing advance value | Common timing advance change rate |
|---|---|---|---|
| **DV>DV1** | Group number 1 | TA_common1 | $K_{TA1}$ |
| **DV1>DV>DV2** | Group number 2 | TA_common2 | $K_{TA2}$ |
| **DV2>DV>DV3** | Group number 3 | TA_common3 | $K_{TA3}$ |
| **DV3>DV** | Group number 4 | TA_common4 | $K_{TA4}$ |

FIG. 3-E

| Interval in which a Doppler value (DV) is located | Reference point | Reference point location information |
|---|---|---|
| **DV>DV1** | Reference point 1 | Location information 1 |
| **DV1>DV>DV2** | Reference point 2 | Location information 2 |
| **DV2>DV>DV3** | Reference point 3 | Location information 3 |
| **DV3>DV** | Reference point 4 | Location information 4 |

FIG. 3-F

FIG. 3-G

| Terminal | | Satellite communication device |
|---|---|---|

401. Obtain a first reference point location indication

402. First reference point location indication

403. Random access preamble

FIG. 4

500

Receiving unit 510 ———— Sending unit 520

FIG. 5

600

Obtaining unit 610

Sending unit 620

FIG. 6

700

Receiving unit 710

Calculation unit 720

Sending unit 730

FIG. 7

800

Obtaining unit 810

Sending unit 820

FIG. 8

FIG. 9

FIG. 10

FIG. 11

Moment t1 at which
TA_common is updated

Downlink
signal received
by the UE

| Frame 16 | Frame 17 | Frame 18 |

Uplink
signal sent
by the UE

| Frame 16 | Frame 17 | Frame 18 |

Time interval T_interval

Moment t2 at which the
uplink signal is sent

FIG. 12

Moment t1 at which
TA_common is updated    Time interval T_interval

Moment t2 at which the base
station receives an uplink signal

| Data sent by the base station | Frame 16 | Frame 17 | | Frame 18 |
|---|---|---|---|---|

FIG. 13

## INTERNATIONAL SEARCH REPORT

| International application No. |
| --- |
| **PCT/CN2020/127590** |

**A.  CLASSIFICATION OF SUBJECT MATTER**

H04W 84/06(2009.01)i

According to International Patent Classification (IPC) or to both national classification and IPC

**B.  FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: update, ta, common, preamble, common TA, rate, location, reference, 更新, 修正, 偏移, 定时, 同步, 公共, 前导, 参考, 位置

**C.  DOCUMENTS CONSIDERED TO BE RELEVANT**

| Category* | Citation of document, with indication, where appropriate, of the relevant passages | Relevant to claim No. |
| --- | --- | --- |
| X | HUAWEI et al. "Discussion on Doppler compensation, timing advance and RACH for NTN" *R1-1910064, 3GPP TSG RAN WG1 Meeting #98bis*, 20 October 2019 (2019-10-20), sections 1-3 | 1-62 |
| X | ETRI. "Discussion on uplink timing advance for NTN" *R1-1910998, 3GPP TSG RAN WG1 #98bis*, 20 October 2019 (2019-10-20), section 2 | 1-62 |
| A | EP 2903358 A1 (KYOCERA CORP.) 05 August 2015 (2015-08-05) entire document | 1-62 |
| A | WO 2010105435 A1 (HUAWEI TECHNOLOGIES CO., LTD.) 23 September 2010 (2010-09-23) entire document | 1-62 |

☐ Further documents are listed in the continuation of Box C.     ☑ See patent family annex.

| * Special categories of cited documents: | |
| --- | --- |
| "A"  document defining the general state of the art which is not considered to be of particular relevance | "T"  later document published after the international filing date or priority date and not in conflict with the application but cited to understand the principle or theory underlying the invention |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **04 January 2021** | **29 January 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/127590**

| Patent document cited in search report | | | Publication date (day/month/year) | Patent family member(s) | | | Publication date (day/month/year) |
|---|---|---|---|---|---|---|---|
| EP | 2903358 | A1 | 05 August 2015 | US | 2017164393 | A1 | 08 June 2017 |
| | | | | JP | 2016192798 | A | 10 November 2016 |
| | | | | JP | 2016167845 | A | 15 September 2016 |
| | | | | JP | 2017103781 | A | 08 June 2017 |
| | | | | WO | 2014050887 | A1 | 03 April 2014 |
| | | | | JP | 2016076977 | A | 12 May 2016 |
| | | | | US | 2015245395 | A1 | 27 August 2015 |
| | | | | JP | 2016167846 | A | 15 September 2016 |
| | | | | JP | 2017022756 | A | 26 January 2017 |
| WO | 2010105435 | A1 | 23 September 2010 | US | 2013252641 | A1 | 26 September 2013 |
| | | | | EP | 2396994 | A1 | 21 December 2011 |
| | | | | US | 2012071165 | A1 | 22 March 2012 |
| | | | | CN | 102257853 | A | 23 November 2011 |

Form PCT/ISA/210 (patent family annex) (January 2015)

**REFERENCES CITED IN THE DESCRIPTION**

**Patent documents cited in the description**

- CN 202010132351

- CN 2019110900112